(19) Europäisches Patentamt
European Patent Office
Office européen des brevets

(11) EP 2 603 002 A1

(12) **EUROPEAN PATENT APPLICATION**
published in accordance with Art. 153(4) EPC

(43) Date of publication:
**12.06.2013 Bulletin 2013/24**

(51) Int Cl.:
*H04N 7/32* (2006.01)

(21) Application number: **11814486.4**

(86) International application number:
**PCT/JP2011/066920**

(22) Date of filing: **26.07.2011**

(87) International publication number:
**WO 2012/017858 (09.02.2012 Gazette 2012/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2010 JP 2010174706**

(71) Applicant: **Sony Corporation
Tokyo 108-0075 (JP)**

(72) Inventor: **SATO, Kazushi
Tokyo 108-0075 (JP)**

(74) Representative: **Körber, Martin Hans
Mitscherlich & Partner
Sonnenstraße 33
80331 München (DE)**

(54) **IMAGE PROCESSING DEVICE AND IMAGE PROCESSING METHOD**

(57) A motion vector number limit setting unit (35) sets the upper limit value of the number of motion vectors in accordance with macroblock size. A motion prediction/ compensation unit (32) detects an optimum prediction mode having a smaller number of motion vectors than the upper limit value. Using the motion vectors of the detected optimum prediction mode, the motion prediction/compensation unit (32) performs motion compensation on a reference image, to generate a predicted image. As the upper limit value of the number of motion vectors is set in accordance with macroblock size, the number of motion vectors is not restricted to a smaller number than necessary, and image degradation and the like can be prevented when extended macroblocks are used.

FIG. 1

**Description**

TECHNICAL FIELD

This technique relates to image processing devices and image processing methods. More particularly, this technique provides an image processing device and an image processing method for performing image processing compatible with extended macroblocks.

BACKGROUND ART

In recent years, apparatuses that handle image information as digital information and achieve high-efficiency information transmission and accumulation in doing so, or apparatuses compliant with a standard such as MPEG for compression through orthogonal transforms like discrete cosine transforms and motion compensation, have been spreading among broadcast stations and general households.

Particularly, MPEG2 (ISO/IEC 13818-2) is defined as a general-purpose image encoding technique, and is currently used for a wide range of applications for professionals and general consumers.

Also, a standard called H.26L (ITU-T Q6/16 VCEG) is being developed for encoding images to be used in video conferences. Compared with the conventional encoding techniques such as MPEG2 and MPEG4, H.26L requires a larger amount of calculation in encoding and decoding, but is known to achieve higher encoding efficiency. As part of the MPEG4 activities, a standard for achieving even higher encoding efficiency based on H.26L is being currently developed as Joint Model of Enhanced-Compression Video Coding, and has already been set as an international standard under the name of H.264 and MPEG-4 Part 10 (hereinafter referred to as H.264/AVC (Advanced Video Coding)).

Further, there is an increasing demand for encoding at a higher compression rate so as to compress 4000 $\times$ 2000 pixels images and the like, or distribute high-definition images in today's circumstances where transmission capacities are limited as in the Internet. In view of this, Non-Patent Document 1 suggests an increase of the macroblock size to 32 $\times$ 32 pixels, for example, which is larger than that in MPEG2 and H.264/AVC. That is, in Non-Patent Document 1, a hierarchical structure is used for macroblocks so that blocks of 16 $\times$ 16 pixels and smaller blocks are compatible with the macroblocks in H.264/AVC. As the supersets of those blocks, larger blocks than those blocks are defined.

CITATION LIST

NON-PATENT DOCUMENT

Non-Patent Document 1: "Video Coding Using Extended Block Sizes" (Study Group 16, Contribution 123, ITU, January 2009)

SUMMARY OF THE INVENTION

PROBLEMS TO BE SOLVED BY THE INVENTION

In H.264/AVC, a macroblock formed with 16 $\times$ 16 pixels is divided into 16 $\times$ 16, 16 $\times$ 8, 8 $\times$ 16, or 8 $\times$ 8 sections, and the sections can have motion vector information independently of one another. Each 8 $\times$ 8 section is further divided into 8 $\times$ 8, 8 $\times$ 4, 4 $\times$ 8, or 4 $\times$ 4 sub-sections, and the sub-sections can have motion vector information independently of one another. As such a motion prediction/compensation operation is performed, the number of sections in a macroblock is increased, and the amount of motion vector information becomes enormous. If the motion vector information is encoded as it is, the encoding efficiency becomes lower. Therefore, in H.264/AVC, the motion compensation block size is determined so that the total number of motion vectors in two successive macroblocks does not exceed a predetermined upper limit value. In view of this, when the upper limit value defined in the H.264/AVC standard is used in a case where the macroblock size is extended, the block size cannot be made smaller due to the limitation on the number of motion vectors, and image quality degradation or the like might occur.

Therefore, the present technique aims to provide image processing devices and image processing methods for performing image processing compatible with extended macroblocks.

SOLUTION TO PROBLEMS

A first aspect of this technique is an image processing device that includes: a setting unit that sets the upper limit value of the number of motion vectors in accordance with the block size of a block that is a unit for encoding to be performed when image data is encoded; a motion prediction/compensation unit that detects a prediction mode when the number of motion vectors of the block is equal to or smaller than the upper limit value set by the setting unit, and performs motion compensation on a reference image by using the motion vectors of the detected prediction mode, to generate a predicted image; and an encoding unit that encodes the image data to generate an encoded stream by using the predicted image generated by the motion prediction/compensation unit.

According to the present technique, the motion vector number limit setting unit sets the upper limit value of the number of motion vectors in accordance with macroblock size. In a case where the macroblock is larger than a predetermined size such as $16 \times 16$ pixels, the upper limit value is set at a larger value than the upper limit value in a $16 \times 16$ pixel macroblock. In a case where the upper limit value of the number of motion vectors is p when the macroblock size is $16 \times 16$ pixels, and the size of the extended macroblock is $(16 \times m) \times (16 \times n)$ pixels, the upper limit value is set at $(p \times m \times n)$. The motion prediction/compensation unit detects an optimum prediction mode by excluding each prediction mode having a larger number of motion vectors than the upper limit value from the candidates for the optimum prediction mode. Using the motion vectors of the detected optimum prediction mode, the motion prediction/compensation unit performs motion compensation on a reference image, to generate a predicted image. The motion prediction/compensation unit also monitors the number of times control is performed to restrict the number of motion vectors to a smaller number than the upper limit value in each frame. When the number of times control is performed exceeds a predetermined number of times, the macroblocks in the next frame are made larger. When a scene change is detected by a scene change detection unit, the macroblocks are adjusted to a predetermined size set in advance. Further, in a case where an operation mode to generate a predicted image by detecting an optimum prediction mode, regardless of the number of motion vectors, and performing motion compensation on a reference image with the use of the motion vectors of the detected optimum prediction mode is set, the motion prediction/compensation unit incorporates determination information indicating that the number of motion vectors is larger than the upper limit value into the compressed image information generated by using the predicted image when the number of motion vectors in the optimum prediction mode is larger than the upper limit value in the operation mode. Also, a block having a larger size than the predetermined size is the largest unit for encoding with the largest size among the units for encoding in a hierarchical structure, for example.

A second aspect of this technique is an image processing method that includes the steps of: setting the upper limit value of the number of motion vectors in accordance with the block size of a block that is a unit for encoding to be performed when image data is encoded; generating a predicted image by detecting a prediction mode when the number of motion vectors of the block is equal to or smaller than the set upper limit value, and performing motion compensation on a reference image with the use of the motion vectors of the detected prediction mode; and generating an encoded stream by encoding the image data with the use of the generated predicted image.

A third aspect of this technique is an image processing device that includes: a setting unit that sets the upper limit value of the number of motion vectors in accordance with the block size of a block that is a unit for decoding to be performed when an encoded stream generated by encoding image data is decoded; a motion compensation unit that detects a prediction mode when the number of motion vectors of the block is equal to or smaller than the upper limit value set by the setting unit, and performs motion compensation on a reference image by using the motion vectors of the detected prediction mode, to generate a predicted image; and a decoding unit that decodes the encoded stream by using the predicted image generated by the motion compensation unit.

According to the present technique, the motion vector number limit setting unit sets the upper limit value of the number of motion vectors in accordance with the macroblock size when an encoded stream generated by encoding image data is decoded. In a case where the macroblock is larger than a predetermined size such as $16 \times 16$ pixels, the upper limit value is set at a larger value than the upper limit value in a $16 \times 16$ pixel macroblock. In a case where the upper limit value of the number of motion vectors is p when the macroblock size is $16 \times 16$ pixels, and the size of the extended macroblock is $(16 \times m) \times (16 \times n)$ pixels, the upper limit value is set at $(p \times m \times n)$. When generating a predicted image by performing motion compensation on a reference image based on motion vector information contained in compressed image information, the motion compensation unit detects a prediction mode while the number of motion vectors is equal to or smaller than the upper limit value. Using the motion vectors of the detected prediction mode, the motion compensation unit performs motion compensation on a reference image, to generate a predicted image. Using the generated predicted image, the decoding unit decodes the encoded stream. When detecting a prediction mode, the motion compensation unit excludes each prediction mode having a larger number of motion vectors than the upper limit value from the candidates for the prediction mode to be detected. Further, the motion compensation unit monitors the number of times control is performed to restrict the number of motion vectors to a smaller value than the upper limit value in each frame. When the number of times control is performed exceeds a predetermined number of times, the blocks in the next frame are made larger in size.

In a case where a scene change is detected in image data, the block size is adjusted to a predetermined size set in advance. In an operation mode to generate a predicted image by detecting an optimum prediction mode, regardless of the number of motion vectors, and performing motion compensation on a reference image with the use of the motion vectors of the detected optimum prediction mode, determination information indicating that the number of motion vectors is larger than the upper limit value is obtained from the encoded stream. Size identification information for identifying the block size of each block having an upper limit value set thereon is also obtained from the encoded stream.

A fourth aspect of this technique is an image processing method that includes: setting the upper limit value of the number of motion vectors in accordance with the block size of a block that is a unit for decoding to be performed when an encoded stream generated by encoding image data is decoded; generating a predicted image by detecting a prediction mode when the number of motion vectors of the block is equal to or smaller than the upper limit value set by the setting unit, and performing motion compensation on a reference image with the use of the motion vectors of the detected prediction mode; and decoding the encoded stream by using the generated predicted image.

EFFECTS OF THE INVENTION

According to this technique, the upper limit value of the number of motion vectors is set in accordance with macroblock size. An optimum prediction mode having a smaller number of motion vectors than the upper limit value is detected, and motion compensation using the motion vectors of the detected optimum prediction mode is performed on a reference image, to generate a predicted image. Accordingly, when macroblocks of an extended size are used, the number of motion vectors is not restricted to a smaller number than necessary, and image processing compatible with the extended macroblocks can be performed.

BRIEF DESCRIPTION OF DRAWINGS

Fig. 1 is a diagram illustrating the structure of an image encoding device.
Figs. 2 are diagrams showing macroblocks in H.264/AVC.
Fig. 3 is a diagram showing a motion compensation block and adjacent blocks.
Fig. 4 is a diagram for explaining Multi-Reference Frame.
Fig. 5 is a diagram for explaining a temporal direct mode.
Fig. 6 is a diagram for explaining a motion prediction/compensation operation with 1/4 pixel precision.
Figs. 7 are diagrams showing pixels to be used in motion prediction/compensation operations with 1/4 pixel precision using a 6-tap FIR filter.
Fig. 8 is a diagram for explaining the upper limit value of the number of motion vectors.
Figs. 9 illustrate a hierarchical structure in a case where macroblock sizes are extended.
Fig. 10 is a diagram showing the structure of the motion prediction/compensation unit and the motion vector number limit setting unit.
Fig. 11 is a flowchart showing an operation of the image encoding device.
Fig. 12 is a flowchart showing prediction operations.
Fig. 13 is a flowchart showing intra prediction operations.
Fig. 14 is a flowchart showing inter prediction operations.
Fig. 15 is a flowchart showing the setting of the upper limit value of the number of motion vectors.
Fig. 16 is a diagram illustrating the structure of another image encoding device.
Fig. 17 is a diagram showing the structure of another motion prediction/compensation unit and the motion vector number limit setting unit.
Fig. 18 is a diagram illustrating the structure of an image decoding device.
Fig. 19 is a diagram showing the structure of the motion compensation unit and the motion vector number limit setting unit.
Fig. 20 is a flowchart showing an operation of the image decoding device.
Fig. 21 is a flowchart showing a predicted image generating operation.
Fig. 22 is a flowchart showing an inter-predicted image generating operation.
Fig. 23 is a diagram showing an example of slice headers.
Fig. 24 is a diagram schematically showing an example structure of a television apparatus.
Fig. 25 is a diagram schematically showing an example structure of a portable telephone device.
Fig. 26 is a diagram schematically showing an example structure of a recording/reproducing apparatus.
Fig. 27 is a diagram schematically showing an example structure of an imaging apparatus.

MODE FOR CARRYING OUT THE INVENTION

The following is a description of embodiments. According to the present technique, when an upper limit value that is set in accordance with a level as in H.264/AVC is used in a case where macroblocks are extended in size, the number of motion vectors is limited to a smaller number than necessary, and image quality might be degraded. Therefore, in a case where macroblocks of an extended size are used, the upper limit value is set in accordance with the macroblock size, so as to guarantee real-time operations in view of memory bandwidth, with the number of motion vectors not being restricted to a smaller number than necessary. Also, the number of motion vectors is not restricted to a smaller number than necessary, and image quality degradation is prevented. Explanation will be made in the following order.

1. Structure of an Image Encoding Device
2. Operations of the Image Encoding Device
3. Structure of Another Image Encoding Device
4. Other Operations of an Image Encoding Device
5. Structure of an Image Decoding Device
6. Operations of the Image Decoding Device
7. Case of Software Processing
8. Applications to Electronic Apparatuses

[1. Structure of an Image Encoding Device]

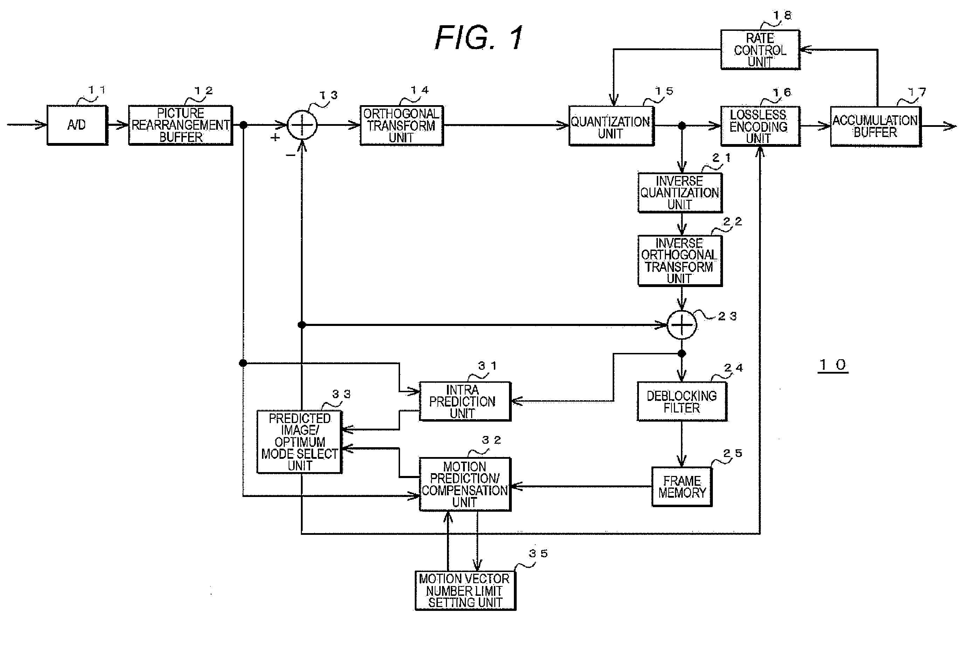

Fig. 1 illustrates the structure of an image encoding device that is an image processing device performing image encoding. The image encoding device 10 includes an analog/digital conversion unit (an A/D conversion unit) 11, a picture rearrangement buffer 12, a subtraction unit 13, an orthogonal transform unit 14, a quantization unit 15, a lossless encoding unit 16, an accumulation buffer 17, and a rate control unit 18. The image encoding device 10 further includes an inverse quantization unit 21, an inverse orthogonal transform unit 22, an addition unit 23, a deblocking filter 24, a frame memory 25, an intra prediction unit 31, a motion prediction/compensation unit 32, and a predicted image/optimum mode select unit 33.

The A/D conversion unit 11 converts analog image signals into digital image data, and outputs the image data to the picture rearrangement buffer 12.

The picture rearrangement buffer 12 rearranges the frames of the image data output from the A/D conversion unit 11. The picture rearrangement buffer 12 rearranges the frames in accordance with the GOP (Group of Pictures) structure related to encoding operations, and outputs the rearranged image data to the subtraction unit 13, the intra prediction unit 31, and the motion prediction/compensation unit 32.

The subtraction unit 13 receives the image data output from the picture rearrangement buffer 12 and predicted image data selected by the later described predicted image/optimum mode select unit 33. The subtraction unit 13 calculates prediction error data that is the difference between the image data output from the picture rearrangement buffer 12 and the predicted image data supplied from the predicted image/optimum mode select unit 33, and outputs the prediction error data to the orthogonal transform unit 14.

The orthogonal transform unit 14 performs an orthogonal transform operation, such as a discrete cosine transform (DCT) or a Karhunen-Loeve transform, on the prediction error data output from the subtraction unit 13. The orthogonal transform unit 14 outputs transform coefficient data obtained by performing the orthogonal transform operation to the quantization unit 15.

The quantization unit 15 receives the transform coefficient data output from the orthogonal transform unit 14 and a rate control signal supplied from the later described rate control unit 18. The quantization unit 15 quantizes the transform coefficient data, and outputs the quantized data to the lossless encoding unit 16 and the inverse quantization unit 21. Based on the rate control signal supplied from the rate control unit 18, the quantization unit 15 switches quantization parameters (quantization scales), to change the bit rate of the quantized data.

The lossless encoding unit 16 receives the quantized data output from the quantization unit 15, and prediction mode information supplied from the later described intra prediction unit 31, the motion prediction/compensation unit 32, and the predicted image/optimum mode select unit 33. The prediction mode information contains information indicating prediction mode, macroblock size, macroblock type, and motion vectors, in accordance with whether the prediction mode is an intra prediction mode or an inter prediction mode. The prediction mode information may also include the later described determination information, size identification information, or the like. The lossless encoding unit 16 performs a lossless encoding operation on the quantized data through variable-length coding or arithmetic coding or the like, to generate and output compressed image information to the accumulation buffer 17. Further, the lossless encoding unit 16 performs lossless encoding on the prediction mode information, and adds the encoded prediction mode information to the compressed image information. For example, the lossless encoding unit 16 adds the encoded prediction mode information to the header information in an encoded stream that is the compressed image information.

The accumulation buffer 17 stores the compressed image information supplied from the lossless encoding unit 16. The accumulation buffer 17 also outputs the stored compressed image information at the transmission rate suitable for the transmission path.

The rate control unit 18 monitors the free space in the accumulation buffer 17. The rate control unit 18 generates the rate control signal in accordance with the free space, and outputs the rate control signal to the quantization unit 15. The rate control unit 18 obtains information indicating the free space from the accumulation buffer 17, for example. In a case where the remaining free space is small, the rate control unit 18 lowers the bit rate of the quantized data through the rate control signal. In a case where the remaining free space in the accumulation buffer 17 is sufficiently large, the rate control unit 18 increases the bit rate of the quantized data through the rate control signal.

The inverse quantization unit 21 inversely quantizes the quantized data supplied from the quantization unit 15. The inverse quantization unit 21 outputs the transform coefficient data obtained by performing the inverse quantization operation to the inverse orthogonal transform unit 22.

The inverse orthogonal transform unit 22 performs an inverse orthogonal transform operation on the transform coefficient data supplied from the inverse quantization unit 21, and outputs the resultant data to the addition unit 23.

The addition unit 23 adds the data supplied from the inverse orthogonal transform unit 22 to the predicted image data supplied from predicted image/optimum mode select unit 33, to generate decoded image data. The addition unit 23 then outputs the decoded image data to the deblocking filter 24 and the frame memory 25. The decoded image data is used as the image data of a reference image.

The deblocking filter 24 performs a filtering operation to reduce block distortions that occur at the time of image encoding. The deblocking filter 24 performs a filtering operation to remove block distortions from the decoded image data supplied from the addition unit 23, and outputs the filtered decoded image data to the frame memory 25.

The frame memory 25 stores the decoded image data that has been subjected to the filtering operation and is supplied from the deblocking filter 24. The decoded image data stored in the frame memory 25 is to be used as reference image data by the motion prediction/compensation unit 32.

The intra prediction unit 31 performs intra prediction operations in all candidate intra prediction modes by using the image data that is output from the picture rearrangement buffer 12 and is about the images to be encoded, and the decoded image data supplied from the addition unit 23. The intra prediction unit 31 further calculates a cost function value in each of the intra prediction modes, and selects an optimum intra prediction mode that is the intra prediction mode with the smallest cost function value calculated or the intra prediction mode with the highest encoding efficiency. The intra prediction unit 31 outputs the predicted image data generated in the optimum intra prediction mode, the prediction mode information about the optimum intra prediction mode, and the cost function value in the optimum intra prediction mode, to the predicted image/optimum mode select unit 33.

The motion prediction/compensation unit 32 performs a motion prediction/compensation operation in each motion-compensated block size. Using the reference image data that is read from the frame memory 25, the motion prediction/compensation unit 32 detects motion vectors from the images to be encoded that are read from the picture rearrangement buffer 12 in each prediction mode or from each motion compensation block in each mode. Based on the detected motion vectors, the motion prediction/compensation unit 32 further performs a motion compensation operation on the decoded image, to generate predicted image data.

The motion prediction/compensation unit 32 also calculates a cost function value in each prediction mode. The motion prediction/compensation unit 32 selects an optimum inter prediction mode that is the motion-compensated block size that has the smallest cost function value calculated, and has a total number of motion vectors of two successive macroblocks that is not larger than the upper limit value set by the later described motion vector number limit setting unit 35. The motion prediction/compensation unit 32 outputs the predicted image data generated in the optimum inter prediction mode, the prediction mode information about the optimum inter prediction mode, and the cost function value and the motion vector information in the optimum inter prediction mode, to the predicted image/optimum mode select unit 33. The motion prediction/compensation unit 32 also performs predictions in a skipped macroblock mode and a direct mode as inter prediction modes.

The predicted image/optimum mode select unit 33 compares the cost function value supplied from the intra prediction unit 31 with the cost function value supplied from the motion prediction/compensation unit 32, and selects the smaller cost function value as the optimum mode with the highest encoding efficiency. The predicted image/optimum mode select unit 33 also outputs the predicted image data generated in the optimum mode to the subtraction unit 13 and the addition unit 23. Further, the predicted image/optimum mode select unit 33 outputs the prediction mode information about the optimum mode to the lossless encoding unit 16. The predicted image/optimum mode select unit 33 performs intra predictions or inter predictions on the slice basis.

Not complying with H.264/AVC, the motion vector number limit setting unit 35 sets the upper limit value of the number of motion vectors in accordance with macroblock size, and outputs the upper limit value to the motion prediction/compensation unit 32. Limiting of the number of motion vectors in H.264/AVC is now described.

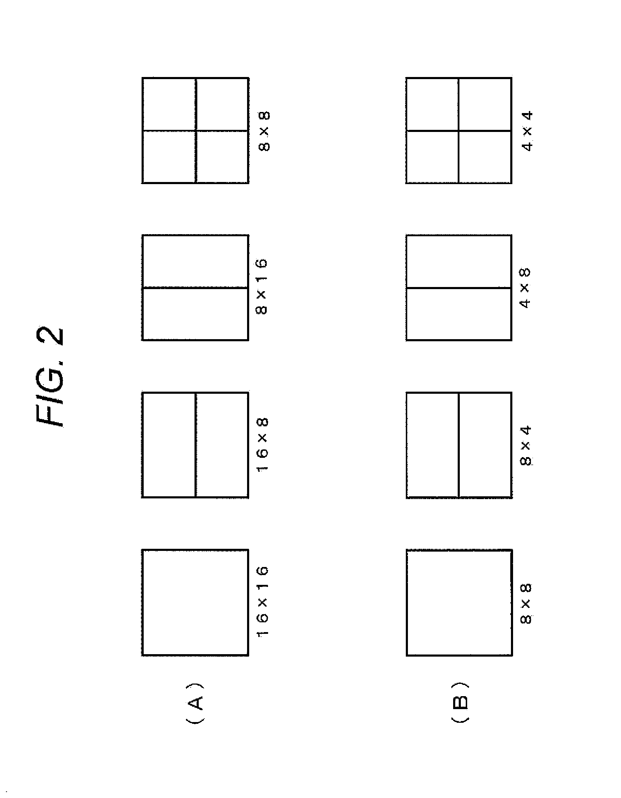

In H.264/AVC, a macroblock formed with $16 \times 16$ pixels is divided into $16 \times 16$, $16 \times 8$, $8 \times 16$, or $8 \times 8$ sections, as shown in Fig. 2(A), and the sections can have motion vector information independently of one another. Each $8 \times 8$ section is further divided into $8 \times 8$, $8 \times 4$, $4 \times 8$, or $4 \times 4$ sub-sections, as shown in Fig. 2(B), and the sub-sections can have motion vector information independently of one another. As such a motion prediction/compensation operation is performed, the amount of motion vector information becomes enormous. If the motion vector information is encoded as it is, the encoding efficiency becomes lower. Therefore, in H.264/AVC, the amount of motion vector information is reduced in the following manner.

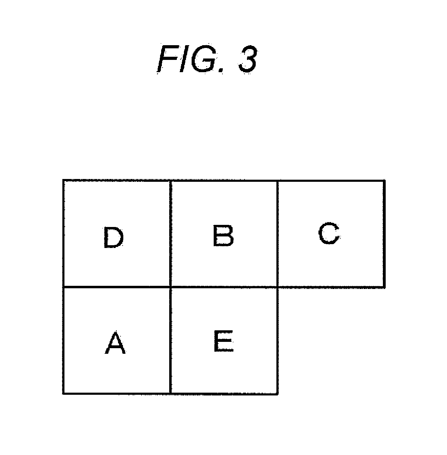

In Fig. 3, block "E" is the motion compensation block to be encoded, and blocks "A" through "D" are already encoded blocks and are adjacent to the block "E".

Here, x is A, B, C, D, or E, and mvx represents the motion vector information about x. First, by using the motion vector information about the blocks A, B, and C, predicted motion vector information pmvE about the motion compensation block E is generated through a median operation according to the equation (1):

$$\mathrm{pmvE} = \mathrm{med}(\mathrm{mvA, mvB, mvC}) \dots (1)$$

In a case where the information about the block "C" is "unavailable" for the block "C" is located at a corner of the image frame or the like, the information about the block "D" is used instead.

In the compressed image information, the data mvdE to be encoded as the motion vector information about the motion compensation block "E" is generated by using pmvE according to the equation (2):

$$\mathrm{mvdE} = \mathrm{mvE} - \mathrm{pmvE} \qquad \dots (2)$$

In an actual operation, processing is performed on the horizontal component and the vertical component of the motion vector information independently of each other.

By using the data mvdE, which is the difference from the predicted motion vector information pmvE, as the motion vector information as described above, a reduction of the amount of motion vector information is achieved.

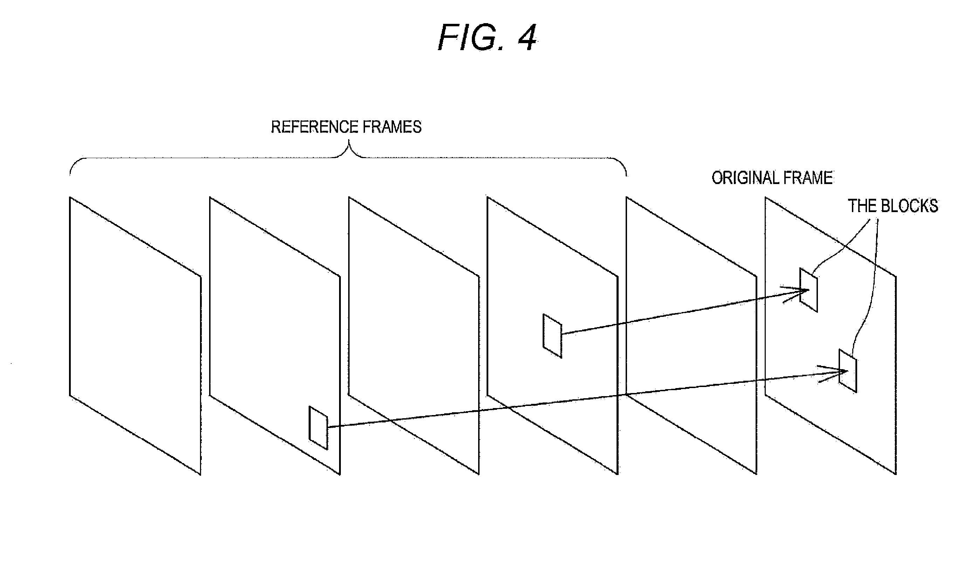

In H.264/AVC, a technique called Multi-Reference Frame, which is not specified in image information encoding techniques such as MPEG-2 and H.263, is specified. Fig. 4 is a diagram for explaining Multi-Reference Frame. In H.264/AVC, reference frames are stored in a memory, and it is possible to refer to a different frame for each motion compensation block, as shown in Fig. 4.

For B pictures in H.264/AVC, a direct mode is set. In the direct mode, motion vector information is not stored in the compressed image information, but the motion vector information about each motion compensation block is extracted from the motion vector information about an adjacent block or a co-located block in an image decoding device.

In the direct mode, a spatial direct mode and a temporal direct mode are set, and one of the two modes can be selected for each slice.

In the spatial direct mode, motion vector information generated through median prediction is applied to each motion compensation block, as shown in the equation (3):

$$\mathrm{mvE} = \mathrm{pmvE} \qquad \dots (3)$$

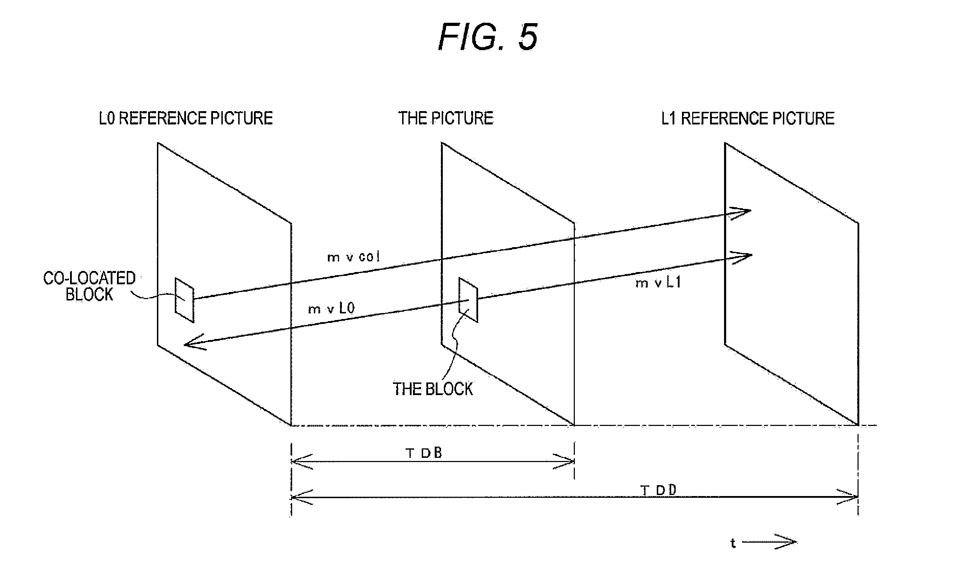

Fig. 5 is a diagram for explaining the temporal direct mode. In Fig. 5, the block located at the address in the same space as a motion compensation block in a L0 reference picture is set as a Co-Located block, and the motion vector information in the Co-Located block is set as mvcol. Also, TDB represents the distance between the picture and the L0 reference picture on the temporal axis, and TDD represents the distance between the L0 reference picture and the L1 reference picture on the temporal axis.

Here, L0 motion vector information mvL0 and L1 motion vector information mvL1 in the picture are generated as indicated by the equations (4) and (5):

$$\mathrm{mvL0} = (\mathrm{TDB/TDD})\mathrm{mvcol} \qquad \dots (4)$$

$$\mathrm{mvL1} = ((\mathrm{TDD\text{-}TDB})/\mathrm{TDD})\mathrm{mvcol} \qquad \dots (5)$$

In the compressed image information, the information indicating the distance on the temporal axis does not exist, and therefore, a calculation is performed by using POC (Picture Order Count).

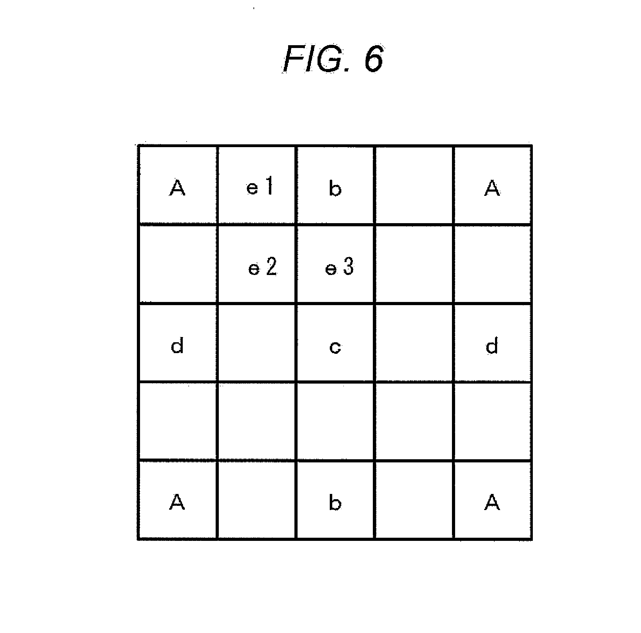

In H.264/AVC, a motion prediction/compensation operation with 1/4 pixel precision is performed by using a 6-tap FIR (Finite Impulse Response) filter, to increase encoding efficiency. Fig. 6 is a diagram for explaining the motion prediction/compensation operation with 1/4 pixel precision.

In Fig. 6, "A" represents the location of each integer precision pixel stored in the frame memory, "b", "c", and "d" represent the locations of 1/2 pixel precision pixels, "e1", "e2", and "e3" represent the locations of 1/4 pixel precision pixels.

Clip1() is defined as shown in the equation (6):

[Mathematical Formula 1]

$$\text{Clip1}(a) = \begin{cases} 0; & \text{if}(a < 0) \\ a; & \text{otherwise} \\ \text{max\_pix}; & \text{if}(a > \text{max\_pix}) \end{cases} \quad \cdot \cdot \cdot \ (6)$$

In the equation (6), the value of max_pix is 255 in a case where an input image has 8-bit precision.

The pixel values at the locations "b" and "d" are generated by using a 6-tap FIR filter as shown in the equations (7) and (8):

$$F = A_{-2} - 5 \bullet A_{-1} + 20 \bullet A_0 + 20 \bullet A_1 - 5 \bullet A_2 + A_3 \ ... \ (7)$$

$$b, d = \text{Clip1}((F + 16) >> 5) \qquad ... \ (8)$$

The pixel value at the location "c" is generated by using a 6-tap FIR filter as shown in the equation (9) or (10) and the equation (11):

$$F = b_{-2} - 5 \bullet b_{-1} + 20 \bullet b_0 + 20 \bullet b_1 - 5 \bullet b_2 + b_3 \ ... \ (9)$$

$$F = d_{-2} - 5 \bullet d_{-1} + 20 \bullet d_0 + 20 \bullet d_1 - 5 \bullet d_2 + d_3 \ ... \ (10)$$

$$c = \text{Clip1} \ ((F+512) >> 10) \qquad ... \ (11)$$

The Clip1 processing is performed only once at last after product-sum operations are performed both in the horizontal direction and the vertical direction.

The pixel values at the locations "e1" through "e3" are generated by linear interpolations as shown in the equations (12) through (14):

$$e1 = (A + b + 1) >> 1 \quad ... \ (12)$$

$$e2 = (b + d + 1) >> 1 \quad ... \ (13)$$

$$e3 = (b + c + 1) >> 1 \quad ... \ (14)$$

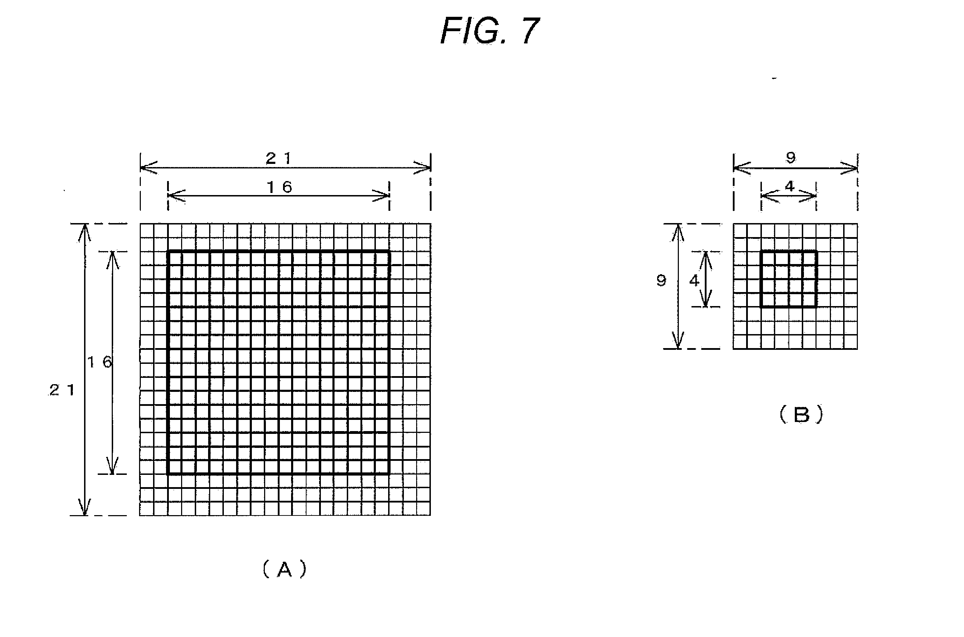

In such a motion prediction/compensation operation with 1/4 pixel precision, the pixel value of the 21 × 21 pixel block shown in Fig. 7(A) is used in a case where the size of the motion compensation block is 16 × 16 pixels. In a case where the size of the motion compensation block is 4 × 4 pixels, the pixel value of the 9 × 9 pixel block shown in Fig. 7(B) is used. As described above, in a motion prediction/compensation operation with 1/4 pixel precision using a 6-tap FIR filter, a 5-pixel overhead is required for each block size in both the horizontal direction and the vertical direction. Therefore, in a case where the block size is 16 × 16 pixels, a pixel value ((21×21)/(16×16)) times larger is required, and in a case where the block size is 4 × 4 pixels, a pixel value ((9×9)/(4×4)) times larger is required. That is, if the image encoding device selects a larger number of small block sizes, the pixel values of a larger number of pixels are required, and a greater memory bandwidth is required.

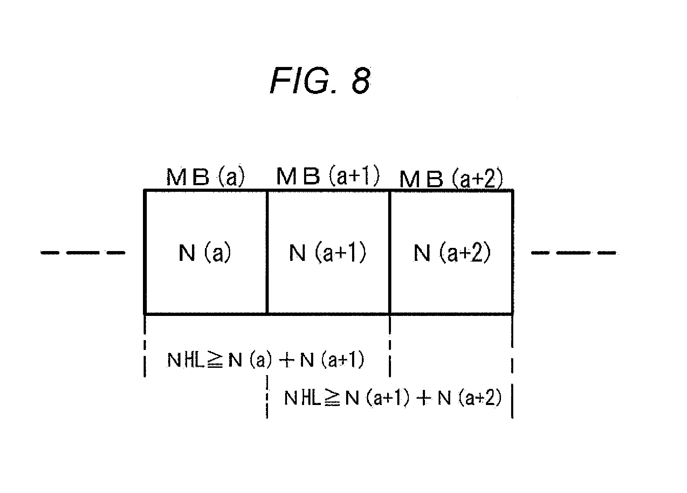

Therefore, in H.264/AVC, the motion compensation block size is determined so that the total number of motion vectors in two successive macroblocks does not exceed a predetermined upper limit value, as shown in Fig. 8. In this manner, increases in memory bandwidth are prevented. Specifically, the total number of the motion vector number N (a) in a macroblock MB(a) and the motion vector number N(a+1) in a macroblock MB(a+1) is restrained from exceeding an upper limit value NHL (16 in the case of level 4 (the resolution of HDTV). Likewise, the total number of the motion vector number N(a+1) in the macroblock MB(a+1) and the motion vector number N(a+2) in a macroblock MB(a+2) is restrained from exceeding the upper limit value NHL. As described above, the total number of motion vectors in two successive macroblocks is restrained from exceeding the predetermined upper limit value NHL. For example, the macroblock size of a B picture is 16 × 16 pixels, and the motion compensation block size is 4 × 4 pixels. In this case, 16 motion compensation blocks are included in one macroblock, and the number of motion vectors is 16 × 2, which is larger than the upper limit value NHL (= 16). Therefore, the motion compensation block size is determined so that the number of motion vectors does not exceed the upper limit value.

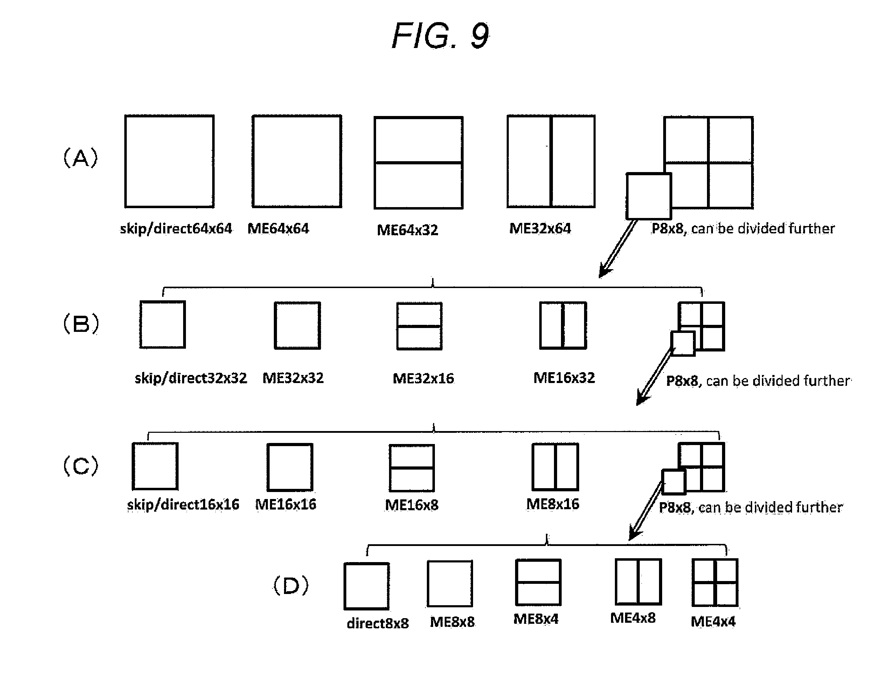

Figs. 9 illustrate a hierarchical structure in a case where macroblock sizes are extended. 8 × 8 pixels sub-macroblockOf Figs. 9, Figs. 9(C) and 9(D) show a 16 × 16 pixel macroblock and an 8 × 8 pixel sub-macroblock defined in the H.264/AVC standard. As macroblocks having sizes made larger from those in H.264/AVC, a 64 × 64 pixel macroblock shown in Fig. 9(A) and a 32 × 32 pixel macroblock shown in Fig. 9(B) are defined. It should be noted that, in Figs. 9, "skip/direct" indicates a block size used in a case where a skipped macroblock mode or a direct mode is selected. Also, "ME" indicates a motion compensation block size. "P8 × 8" indicates that the block can be further divided in a lower hierarchical level with a smaller block size.

As described above, when the upper limit value defined in the H.264/AVC standard is also used in a case where the macroblock size is extended, the number of motion vectors is limited to a smaller number than necessary, and image quality might be degraded. For example, if the upper limit value that is used in cases where each macroblock is 16 × 16 pixels in size is used in a 64 × 64 pixel macroblock, the number of motion vectors is limited to a smaller number than necessary, since the upper limit value remains the same though the block size is four times larger. As a result, the motion compensation block size cannot be made smaller, and image quality degradation or the like might occur.

Therefore, the motion vector number limit setting unit 35 sets the upper limit value of the number of motion vectors in accordance with macroblock size. In a case where the size is larger than a macroblock of a predetermined size (N), the motion vector number limit setting unit 35 sets a larger upper limit value than the upper limit value in a macroblock of the predetermined size (N), to guarantee real-time operations in view of memory bandwidth, with the number of motion vectors not being restricted to a smaller number than necessary. For example, in a case where the upper limit value of the number of motion vectors is p when the macroblock size is 16 × 16 pixels (N = 16), and the macroblock size is (16 × m) × (16 × n) pixels, the motion vector number limit setting unit 35 sets the upper limit value at (m × n × p), which is in predetermined ratio to the macroblock size. In this manner, real-time operations are guaranteed in view of memory bandwidth, with the number of motion vectors not being restricted to a smaller number than necessary.

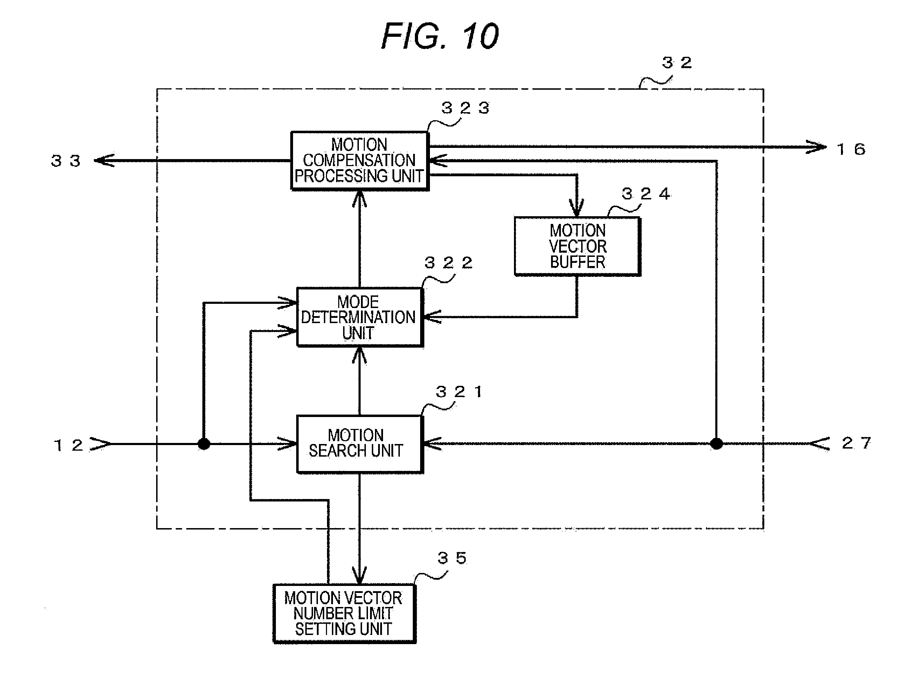

Fig. 10 is a diagram showing the structure of the motion prediction/compensation unit and the motion vector number limit setting unit.

The motion prediction/compensation unit 32 includes a motion search unit 321, a mode determination unit 322, a motion compensation processing unit 323, and a motion vector buffer 324.

Rearranged image data supplied from the picture rearrangement buffer 12, and reference image data read from the frame memory 25 are supplied to the motion search unit 321.

The motion search unit 321 performs motion search operations in all candidate inter prediction modes, and outputs motion vector information indicating the motion vectors detected through the motion search operations to the mode determination unit 322. Based on the detected motion vectors, the motion search unit 321 performs motion compensation on the reference image data, to generate and output predicted image data to the mode determination unit 322. The motion search unit 321 further outputs information indicating the macroblock size, or size identification information for identifying the block size of a block on which an upper limit value is set, to the motion vector number limit setting unit 35.

Based on the size identification information, the motion vector number limit setting unit 35 sets the upper limit value of the number of motion vectors in accordance with the block size, and notifies the mode determination unit 322 of the set upper limit value.

The motion vector information and predicted image data about all the candidate inter prediction modes are supplied from the motion search unit 321 to the mode determination unit 322. Motion vector information that is generated at an encoded adjacent block is also supplied from the later described motion vector buffer 324 to the mode determination unit 322. Further, rearranged image data supplied from the picture rearrangement buffer 12 is also supplied to the mode determination unit 322 to calculate cost functions.

The mode determination unit 322 calculates a cost function value in each of the candidates for the optimum inter prediction mode by using the image data supplied from the picture rearrangement buffer 12 and the predicted image data supplied from the motion search unit 321. The mode determination unit 322 selects the mode with the smallest cost function value as the optimum inter prediction mode for the macroblock being encoded. Using the motion vector information about the adjacent macroblock supplied from the motion vector buffer 324, the mode determination unit 322 calculates the total number of motion vectors in the two successive macroblocks. The mode determination unit 322 excludes each mode with the calculated value larger than the upper limit value set by the motion vector number limit setting unit 35, from the candidate modes, and then determines the optimum inter prediction mode.

Further, the mode determination unit 322 outputs the prediction mode information, the motion vector information, and the cost function value of the mode determined to be the optimum mode, to the motion compensation processing unit 323. The prediction mode information may contain the size identification information for identifying the block size of each block having an upper limit value set thereon. Based on the motion vector information supplied from the motion vector buffer 324, the mode determination unit 322 also calculates predicted motion vectors. The mode determination unit 322 calculates difference motion vectors that are the differences between the calculated predicted motion vectors and the motion vectors detected by the motion search unit 321, and outputs difference motion vector information indicating the difference motion vectors contained in the motion vector information to the motion compensation processing unit 323.

Using the image data about reference images supplied from the frame memory 25, the motion compensation processing unit 323 performs motion compensation based on the motion vector information supplied from the mode determination unit 322, to generate predicted image data. The motion compensation processing unit 323 outputs the generated predicted image data, the cost function value, and the prediction mode information (containing the macroblock size, the macroblock type, the prediction mode, the difference motion vector information, and the like) to the predicted image/optimum mode select unit 33. The motion compensation processing unit 323 also outputs the motion vector information to the motion vector buffer 324.

The motion vector buffer 324 temporarily stores the motion vector information supplied from the motion compensation processing unit 323. The motion vector buffer 324 also supplies the stored motion vector information to the mode determination unit 322 to calculate the total number of motion vectors in two successive macroblocks and predicted motion vectors.

[2. Operations of the Image Encoding Device]

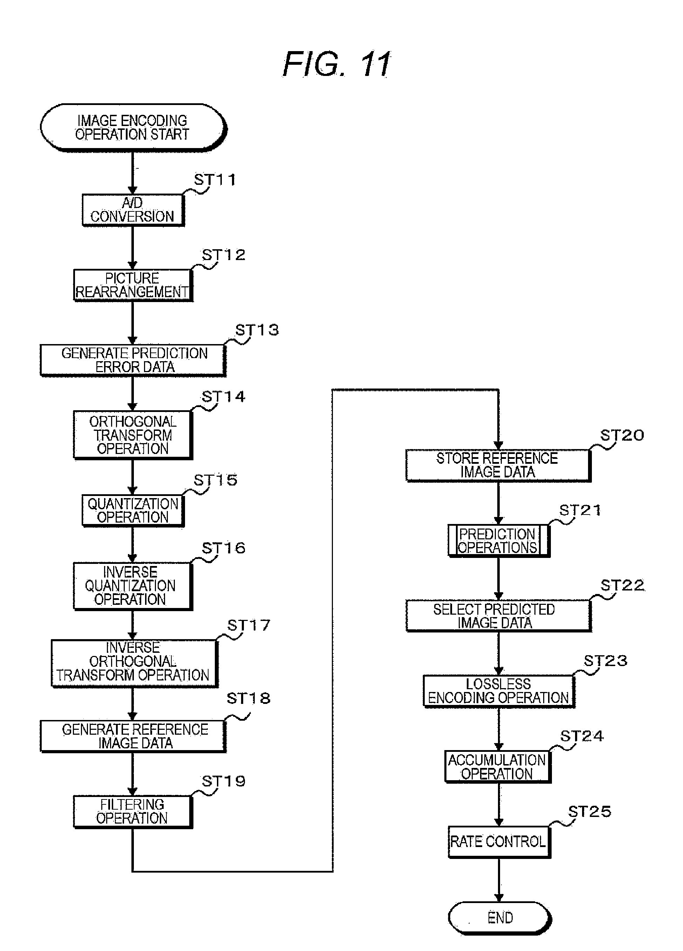

Fig. 11 is a flowchart showing an operation of the image encoding device. In step ST 11, the A/D conversion unit 11 performs an A/D conversion on an input image signal.

In step ST12, the picture rearrangement buffer 12 performs image rearrangement. The picture rearrangement buffer 12 stores the image data supplied from the A/D conversion unit 11, and rearranges the respective pictures in encoding order, instead of display order.

In step ST 13, the subtraction unit 13 generates prediction error data. The subtraction unit 13 generates the prediction error data by calculating the differences between the image data of the images rearranged in step ST 12 and predicted image data selected by the predicted image/optimum mode select unit 33. The prediction error data has a smaller data amount than the original image data. Accordingly, the data amount can be made smaller than in a case where images are directly encoded.

In step ST14, the orthogonal transform unit 14 performs an orthogonal transform operation. The orthogonal transform unit 14 orthogonally transforms the prediction error data supplied from the subtraction unit 13. Specifically, orthogonal transforms such as discrete cosine transforms or Karhunen-Loeve transforms are performed on the prediction error data, and transform coefficient data is output.

In step ST15, the quantization unit 15 performs a quantization operation. The quantization unit 15 quantizes the transform coefficient data. In the quantization, rate control is performed as will be described later in the description of step ST25.

In step ST16, the inverse quantization unit 21 performs an inverse quantization operation. The inverse quantization unit 21 inversely quantizes the transform coefficient data quantized by the quantization unit 15, having characteristics compatible with the characteristics of the quantization unit 15.

In step ST17, the inverse orthogonal transform unit 22 performs an inverse orthogonal transform operation. The inverse orthogonal transform unit 22 performs an inverse orthogonal transform on the transform coefficient data inversely quantized by the inverse quantization unit 21, having the characteristics compatible with the characteristics of the orthogonal transform unit 14.

In step ST18, the addition unit 23 generates reference image data. The addition unit 23 generates the reference image data (decoded image data) by adding the predicted image data supplied from the predicted image/optimum mode select unit 33 to the data of the location that corresponds to the predicted image and has been subjected to the inverse orthogonal transform.

In step ST19, the deblocking filter 24 performs a filtering operation. The deblocking filter 24 removes block distortions by filtering the decoded image data output from the addition unit 23.

In step ST20, the frame memory 25 stores the reference image data. The frame memory 25 stores the filtered reference image data (the decoded image data).

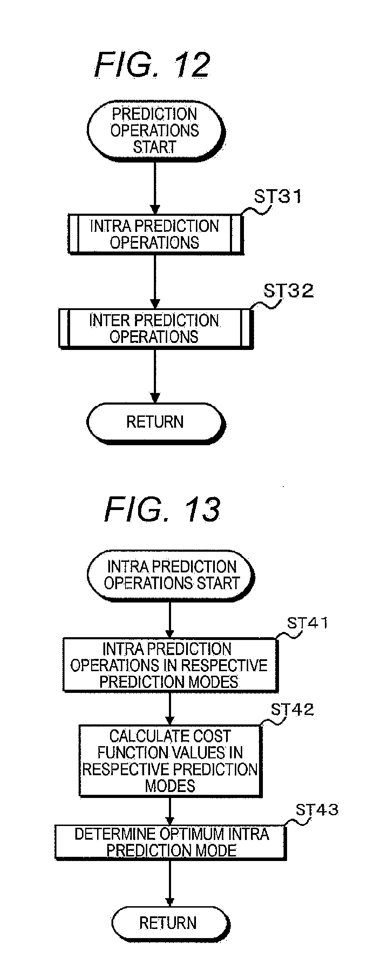

In step ST21, the intra prediction unit 31 and the motion prediction/compensation unit 32 each perform prediction operations. Specifically, the intra prediction unit 31 performs intra prediction operations in intra prediction modes, and the motion prediction/compensation unit 32 performs motion prediction/compensation operations in inter prediction modes. The prediction operations will be described later in detail with reference to Fig. 12. In this step, prediction operations are performed in all candidate prediction modes, and cost function values are calculated in all the candidate prediction modes. Based on the calculated cost function values, an optimum intra prediction mode and an optimum inter prediction mode are selected, and the predicted images generated in the selected prediction modes, the cost functions, and the prediction mode information are supplied to the predicted image/optimum mode select unit 33.

In step ST22, the predicted image/optimum mode select unit 33 selects predicted image data. Based on the respective cost function values output from the intra prediction unit 31 and the motion prediction/compensation unit 32, the predicted image/optimum mode select unit 33 determines the optimum mode to optimize the encoding efficiency. The predicted image/optimum mode select unit 33 further selects the predicted image data in the determined optimum mode, and outputs the selected predicted image data to the subtraction unit 13 and the addition unit 23. This predicted image is used in the operations in steps ST13 and ST18, as described above. The prediction mode information corresponding to the selected predicted image data is output to the lossless encoding unit 16.

In step ST23, the lossless encoding unit 16 performs a lossless encoding operation. The lossless encoding unit 16 performs lossless encoding on the quantized data output from the quantization unit 15. That is, lossless encoding such as variable-length coding or arithmetic coding is performed on the quantized data, to compress the data. At this point, lossless encoding is also performed on the prediction mode information that is input to the lossless encoding unit 16 in step ST22 as described above. Further, the lossless-encoded data of the prediction mode information is incorporated into the compressed image information generated by performing lossless encoding on the quantized data.

In step ST24, the accumulation buffer 17 performs an accumulation operation. The accumulation buffer 17 stores the compressed image information output from the lossless encoding unit 16. The compressed image information stored in the accumulation buffer 17 is read and transmitted to the decoding side via a transmission path where necessary.

In step ST25, the rate control unit 18 performs rate control. The rate control unit 18 controls the quantization operation rate of the quantization unit 15 so that an overflow or an underflow does not occur in the accumulation buffer 17 when the accumulation buffer 17 stores compressed image information.

Referring now to the flowchart of Fig. 12, the prediction operations in step ST21 of Fig. 11 are described.

In step ST31, the intra prediction unit 31 performs intra prediction operations. The intra prediction unit 31 performs intra predictions on the image of the current block in all the candidate intra prediction modes. The image data of a decoded image to be referred to in each intra prediction is decoded image data not yet subjected to the blocking filtering at the deblocking filter 24. In the intra prediction operations, intra predictions are performed in all the candidate intra prediction modes, and cost function values are calculated in all the candidate intra prediction modes. Based on the calculated cost function values, the intra prediction mode with the highest encoding efficiency is selected from all the intra prediction modes.

In step ST32, the motion prediction/compensation unit 32 performs inter prediction operations. Using the decoded image data that is stored in the frame memory 25 and has been subjected to the deblocking filtering, the motion prediction/compensation unit 32 performs inter prediction operations in the candidate inter prediction modes. In the inter prediction operations, inter prediction operations are performed in all the candidate inter prediction modes, and cost function values are calculated in all the candidate inter prediction modes. Based on the calculated cost function values, the inter prediction mode with the highest encoding efficiency is selected from all the inter prediction modes.

Referring now to the flowchart of Fig. 13, the intra prediction operations in step ST31 of Fig. 11 are described.

In step ST41, the intra prediction unit 31 performs intra prediction operations in the respective prediction modes. Using the decoded image data not yet subjected to the blocking filtering, the intra prediction unit 31 generates predicted image data in each intra prediction mode.

In step ST42, the intra prediction unit 31 calculates the cost function value in each prediction mode. As specified in the JM (Joint Model), which is the reference software in H.264/AVC, the cost function values are calculated by the technique of High Complexity Mode or Low Complexity Mode.

Specifically, in the High Complexity Mode, the operation that ends with the lossless encoding operation is provisionally performed as the operation of the step ST42 in each candidate prediction mode, to calculate the cost function value expressed by the following equation (15) in each prediction mode:

$$\text{Cost}(\text{Mode} \in \Omega) = D + \lambda \bullet R \qquad \ldots (15)$$

Here, $\Omega$ represents the universal set of the candidate prediction modes for encoding the block or macroblock. D represents the energy difference (distortion) between the decoded image and an input image in a case where encoding is performed in a prediction mode. R represents the generated encoding amount including orthogonal transform coefficients and prediction mode information, and $\lambda$ represents the Lagrange multiplier given as the function of a quantization parameter QP.

That is, to perform encoding in the High Complexity Mode, a provisional encoding operation needs to be performed in all the candidate prediction modes to calculate the above parameters D and R, and therefore, a larger amount of calculation is required.

In the Low Complexity Mode, on the other hand, the generation of a predicted image and the calculation of the header bit such as motion vector information and prediction mode information are performed as the operation of step ST42 in all the candidate prediction modes, and the cost function value expressed by the following equation (16) is calculated in each prediction mode:

$$\text{Cost}(\text{Mode} \in \Omega) = D + \text{QP2Quant}(\text{QP}) \bullet \text{Header\_Bit} \qquad \ldots (16)$$

Here, $\Omega$ represents the universal set of the candidate prediction modes for encoding the block or macroblock. D represents the energy difference (distortion) between the decoded image and an input image in a case where encoding is performed in a prediction mode. Header_Bit represents the header bit corresponding to the prediction mode, and QP2Quant is the function given as the function of the quantization parameter QP.

That is, in the Low Complexity Mode, a prediction operation needs to be performed in each prediction mode, but any decoded image is not required. Accordingly, the amount of calculation can be smaller than that required in the High Complexity Mode.

In step ST43, the intra prediction unit 31 determines the optimum intra prediction mode. Based on the cost function values calculated in step ST42, the intra prediction unit 31 selects the one intra prediction mode with the smallest cost function value among the calculated cost function values, and determines the selected intra prediction mode to be the optimum intra prediction mode.

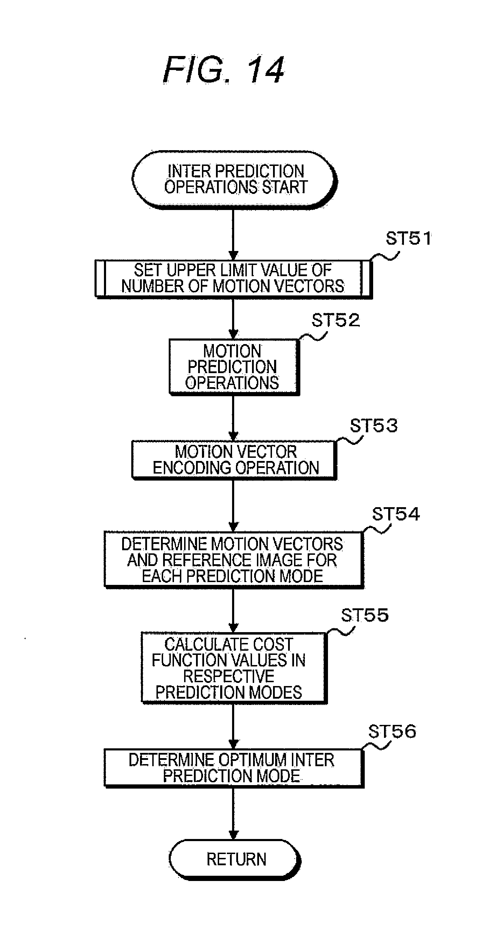

Referring now to the flowchart of Fig. 14, the inter prediction operations in step ST32 of Fig. 11 are described. In step ST51, the motion vector number limit setting unit 35 sets the upper limit value of the number of motion vectors.

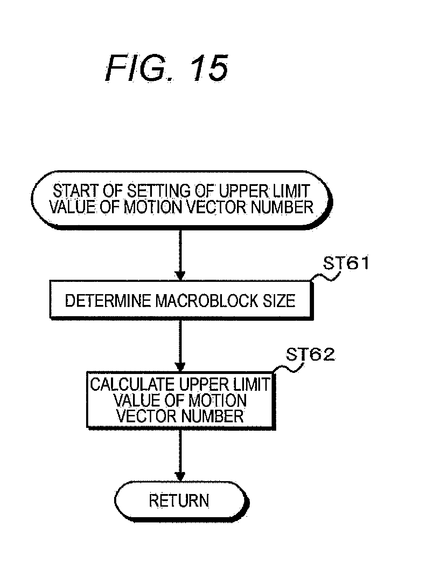

Fig. 15 is a flowchart showing the setting of the upper limit value of the number of motion vectors. In step ST61, the motion vector number limit setting unit 35 determines the macroblock size. The motion vector number limit setting unit 35 obtains the size identification information indicating the macroblock size for performing inter predictions from the motion search unit 321, and determines the macroblock size. The operation then moves on to step ST62.

In step ST62, the motion vector number limit setting unit 35 calculates the upper limit value of the number of motion vectors. In accordance with the macroblock size, the motion vector number limit setting unit 35 calculates the upper limit value of the number. If the macroblock is larger than a 16 × 16 pixel macroblock, the motion vector number limit setting unit 35 sets a larger upper limit value than the upper limit value in a 16 × 16 pixel macroblock, to guarantee real-time operations in view of memory bandwidth, with the number of motion vectors not being restricted to a smaller number than necessary. For example, in a case where the upper limit value of the number of motion vectors is p when the macroblock size is 16 × 16 pixels, and the macroblock size is (16 × m) × (16 × n) pixels, the motion vector number limit setting unit 35 sets the upper limit value at (m × n × p). The operation then returns to step ST52 of Fig. 14.

In step ST52, the motion prediction/compensation unit 32 performs motion prediction operations. The motion prediction/compensation unit 32 performs a motion prediction in each prediction mode, to detect motion vectors. The operation then moves on to step ST53.

In step ST53, the motion prediction/compensation unit 32 performs a motion vector encoding operation. The motion prediction/compensation unit 32 generates motion vector information indicating difference motion vectors that are the differences between the motion vectors detected in the respective prediction modes and the motion vectors of encoded blocks. The motion prediction/compensation unit 32 performs lossless encoding on the generated motion vector information, and then moves on to step ST54.

In step ST54, the motion prediction/compensation unit 32 determines motion vectors and a reference image for each prediction mode. The motion prediction/compensation unit 32 determines the motion vectors in each mode for each motion compensation block size, and the reference image used in the detection of the motion vectors. The operation then moves on to step ST55. The motion prediction/compensation unit 32 also excludes each prediction mode having a larger total number of motion vectors of two successive macroblocks than the upper limit value, from the candidates for the optimum inter prediction mode.

In step ST55, the motion prediction/compensation unit 32 calculates a cost function value in each prediction mode. Using the above mentioned equation (15) or (16), the motion prediction/compensation unit 32 calculates the cost function values. The cost function value calculations in the inter prediction modes involve the evaluations of cost function values in the skipped macroblock mode or the direct mode specified in H.264/AVC.

In step ST56, the motion prediction/compensation unit 32 determines the optimum inter prediction mode. Based on the cost function values calculated in step ST55, the motion prediction/compensation unit 32 selects the one inter prediction mode with the smallest cost function value among the calculated cost function values, and determines the selected inter prediction mode to be the optimum inter prediction mode.

As described above, with the image processing device illustrated in Fig. 1 and the image processing method shown in Fig. 11, the upper limit value of the number of motion vectors is set in accordance with macroblock size. Accordingly, even though the number of motion vectors is limited so as not to exceed the upper limit value, real-time operations can be guaranteed in view of memory bandwidth, with the number of motion vectors not being restricted to a smaller number than necessary. Also, the number of motion vectors is not limited to a smaller number than necessary, so that image quality degradation can be prevented. That is, image processing suitable for extended macroblocks can be performed.

[3. Structure of Another Image Encoding Device]

The following is a description of the structure of another image encoding device in which the number of times control is performed to restrict the number of motion vectors to a smaller number than the upper limit value is monitored for each frame, so that encoding operations can be performed more efficiently.

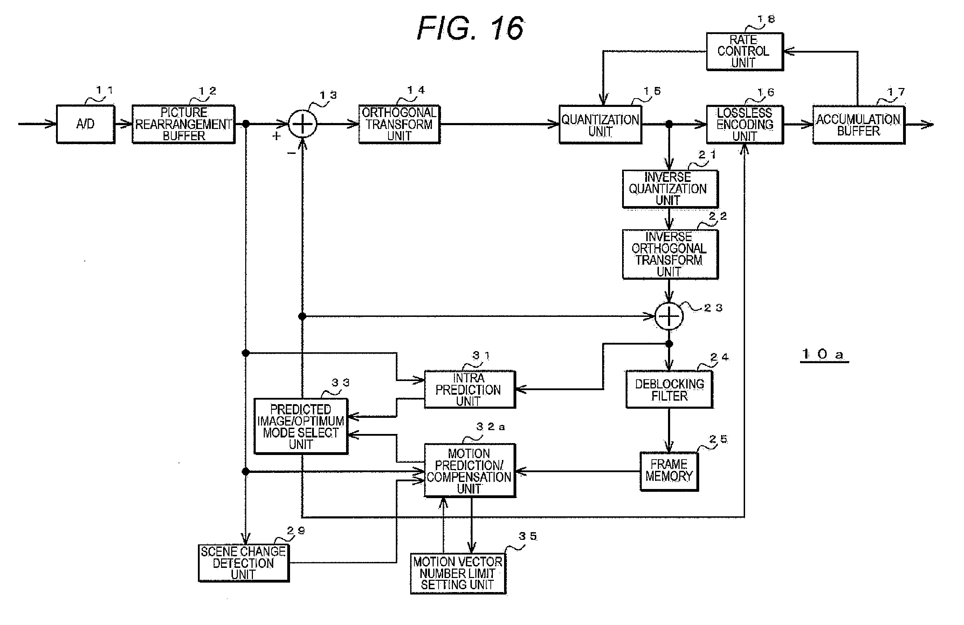

Fig. 16 illustrates the structure of another image encoding device. Like the image encoding device 10, the image encoding device 10a includes an analog/digital conversion unit (an A/D conversion unit) 11, a picture rearrangement buffer 12, a subtraction unit 13, an orthogonal transform unit 14, a quantization unit 15, a lossless encoding unit 16, an accumulation buffer 17, and a rate control unit 18. Like the image encoding device 10, the image encoding device 10a further includes an inverse quantization unit 21, an inverse orthogonal transform unit 22, an addition unit 23, a deblocking filter 24, a frame memory 25, an intra prediction unit 31, a motion prediction/compensation unit 32a, a predicted image/optimum mode select unit 33, and a motion vector number limit setting unit 35. Further, the image encoding device 10a includes a scene change detection unit 29. In the following description, only the aspects that differ from those of the image encoding device 10 will be described.

The scene change detection unit 29 detects scene changes by using input image data output from the picture rearrangement buffer 12, and outputs the scene change detection results to the motion prediction/compensation unit 32a.

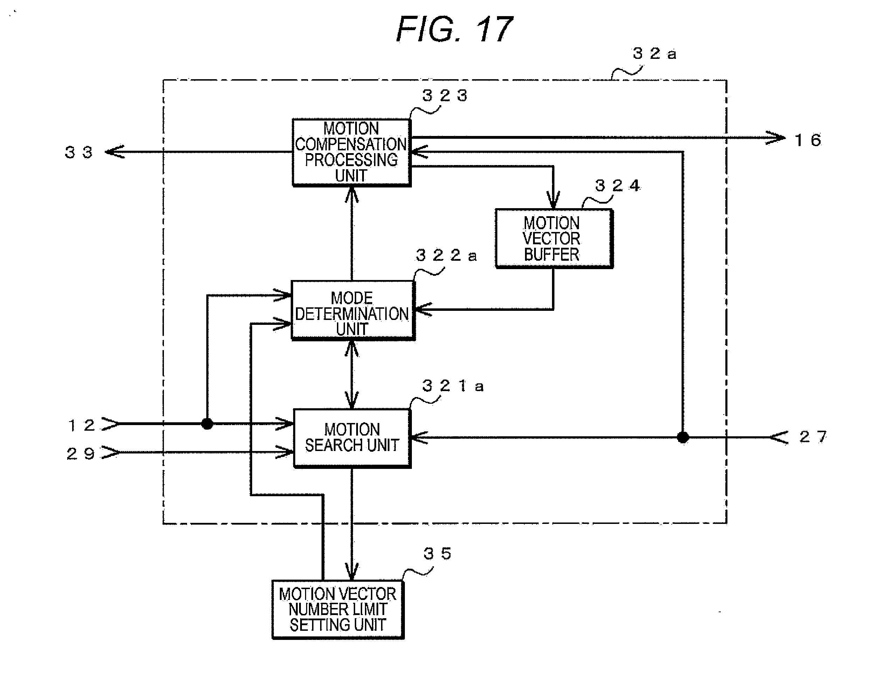

Fig. 17 shows the structure of the other motion prediction/compensation unit and the motion vector number limit setting unit.

The motion prediction/compensation unit 32a includes a motion search unit 321a, a mode determination unit 322a, a motion compensation processing unit 323, and a motion vector buffer 324.

Rearranged image data supplied from the picture rearrangement buffer 12, and reference image data read from the frame memory 25 are supplied to the motion search unit 321a. Also, the scene change detection results are supplied from the scene change detection unit 29 to the motion search unit 321a, and the number of times control is performed to restrict the number of motion vectors to a smaller number than the upper limit value is supplied from the mode determination unit 322a to the motion search unit 321a.

The motion search unit 321a performs motion search operations in all candidate inter prediction modes, and outputs motion vector information indicating the motion vectors detected through the motion search operations to the mode determination unit 322a. Based on the detected motion vectors, the motion search unit 321a performs motion compensation on the reference image data, to generate and output predicted image data to the mode determination unit 322a. The motion search unit 321a further outputs size identification information for identifying the block size of a block on which an upper limit value is set, to the motion vector number limit setting unit 35. In a case where the number of times control is performed to restrict the number of motion vectors to a smaller number than the upper limit value is larger than a predetermined number of times, the motion search unit 321a makes the macroblocks larger in the next frame. When the scene change detection results indicate that a scene change has been detected, the motion search unit 321a performs an operation to return the macroblock size to a predetermined size.

The motion vector information and predicted image data about all the candidate inter prediction modes are supplied from the motion search unit 321a to the mode determination unit 322a. Motion vector information that is generated at an encoded adjacent block is also supplied from the motion vector buffer 324 to the mode determination unit 322a. Further, rearranged image data supplied from the picture rearrangement buffer 12 is also supplied to the mode determination unit 322a to calculate cost functions.

The mode determination unit 322a calculates a cost function value in each of the candidates for the optimum inter prediction mode by using the image data supplied from the picture rearrangement buffer 12 and the predicted image data supplied from the motion search unit 321a. The mode determination unit 322a selects the mode with the smallest cost function value as the optimum inter prediction mode for the macroblock being encoded.

Using the motion vector information about the adjacent macroblock supplied from the motion vector buffer 324, the mode determination unit 322a calculates the total number of motion vectors of the two successive macroblocks. In a case where the total number of motion vectors in the mode with the smallest cost function value is larger than the upper limit value, the mode determination unit 322a performs control to determine the optimum inter prediction mode to be the mode having the smallest cost function value with the total value not exceeding the upper limit value, such as control to exclude, from the candidates for the optimum inter prediction mode, each prediction mode having a larger total number of motion vectors of two successive macroblocks than the upper limit value. The number of times control is performed (the number of macroblocks) in each frame is then output to the motion search unit 321a for each frame.

Further, the mode determination unit 322a outputs the prediction mode information, the motion vector information, and the cost function value of the mode determined to be the optimum mode, to the motion compensation processing unit 323. Based on the motion vector information supplied from the motion vector buffer 324, the mode determination unit 322a also calculates predicted motion vectors. The mode determination unit 322a calculates difference motion vectors that are the differences between the calculated predicted motion vectors and the motion vectors detected by the motion search unit 321a, and outputs difference motion vector information indicating the difference motion vectors contained in the motion vector information to the motion compensation processing unit 323.

As described above, in a case where the number of times control is performed to restrict the number of motion vectors to a smaller number than the upper limit value is monitored in each frame, and the number of times control is performed becomes larger than a predetermined number of times, the macroblocks are made larger in the next frame. By doing so, the upper limit value becomes larger, and the limit on the number of motion vectors becomes less strict. Accordingly, the number of times control is performed to restrict the number of motion vectors to a smaller number than the upper limit value can be made smaller, and efficient encoding operations can be performed. When a scene change is detected, the macroblocks are returned to the predetermined size. Accordingly, when image continuity is lost due to a scene change, encoding operations can be performed with the predetermined macroblock size.

[4. Other Operations of an Image Encoding Device]

The following is a description of other operations of an image encoding device that has an operation mode to allow a larger number of motion vectors than the upper limit value. It should be noted that the structure of the image encoding device in this case is the same as that illustrated in Fig. 1 or 10.

The limit of the number of motion vectors is set so as to guarantee real-time operations in view of memory bandwidth as described above. Therefore, an operation mode not required to guarantee real-time operations may be set to allow a larger number of motion vectors than the upper limit value. In that case, the number of motion vectors is not limited to the upper limit value, and accordingly, more suitably predicted images can be generated.

In a case where such an operation mode is used, information indicating that real-time decoding operations are not guaranteed, or determination information (such as a flag) indicating that the number of motion vectors is larger than the upper limit value, is provided in a sequence parameter set or the like in the compressed image information. As such a flag is provided, the image decoding device that decodes the compressed image information can easily determine that the number of motion vectors is larger than the upper limit value by detecting the flag. Accordingly, it is possible to readily notify users or the like that real-time decoding operations are not guaranteed.

[5. Structure of an Image Decoding Device]

compressed image information generated by encoding input images is supplied to an image decoding device via a predetermined transmission path or a recording medium or the like, and is decoded therein.

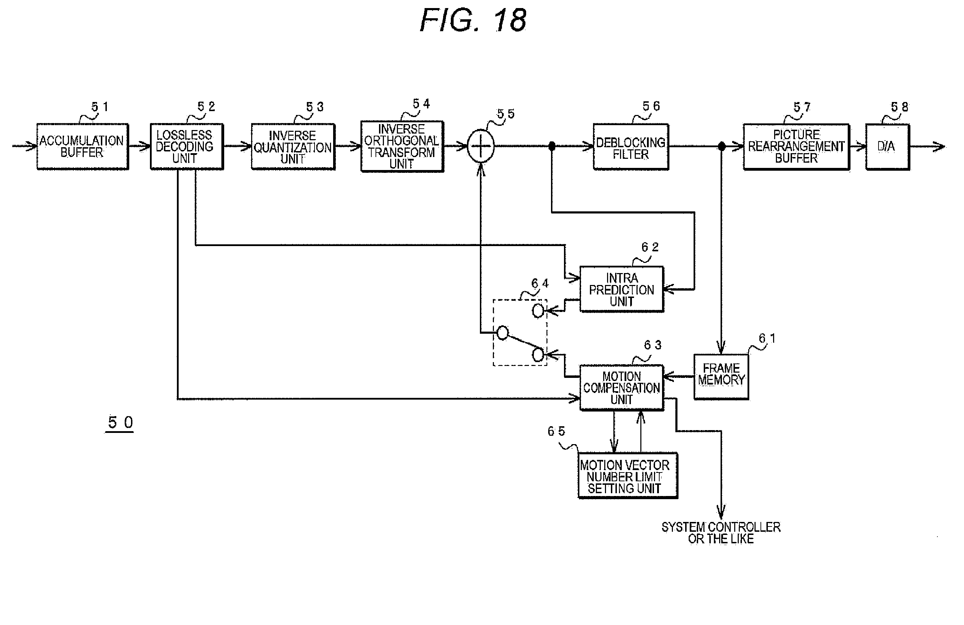

Fig. 18 shows the structure of an image decoding device that is an image processing device decoding the compressed image information. The image decoding device 50 includes an accumulation buffer 51, a lossless decoding unit 52, an inverse quantization unit 53, an inverse orthogonal transform unit 54, an addition unit 55, a deblocking filter 56, a picture rearrangement buffer 57, and a digital/analog conversion unit (a D/A conversion unit) 58. The image decoding device 50 further includes a frame memory 61, an intra prediction unit 62, a motion compensation unit 63, a selector 64, and a motion vector number limit setting unit 65.

The accumulation buffer 51 stores transmitted compressed image information. The lossless decoding unit 52 decodes the compressed image information supplied from the accumulation buffer 51 by a technique compatible with the encoding technique used by the lossless encoding unit 16 of Fig. 1.

The lossless decoding unit 52 outputs the prediction mode information obtained by decoding the compressed image information to the intra prediction unit 62 and the motion compensation unit 63.

The inverse quantization unit 53 inversely quantizes the quantized data decoded by the lossless decoding unit 52, using a technique compatible with the quantization technique used by the quantization unit 15 of Fig. 1. The inverse orthogonal transform unit 54 performs an inverse orthogonal transform on the output from the inverse quantization unit 53 by a technique compatible with the orthogonal transform technique used by the orthogonal transform unit 14 of Fig. 1, and outputs the result to the addition unit 55.

The addition unit 55 generates decoded image data by adding the data subjected to the inverse orthogonal transform to predicted image data supplied from the selector 64, and outputs the decoded image data to the deblocking filter 56 and the intra prediction unit 62.

The deblocking filter 56 performs deblocking filtering on the decoded image data supplied from the addition unit 55, and removes block distortions. The resultant data is supplied to and stored in the frame memory 61, and is also output to the picture rearrangement buffer 57.

The picture rearrangement buffer 57 performs image rearrangement. Specifically, the frame order rearranged in the order of encoding performed by the picture rearrangement buffer 12 of Fig. 1 is rearranged in the original display order, and is output to the D/A conversion unit 58.

The D/A conversion unit 58 performs a D/A conversion on the image data supplied from the picture rearrangement buffer 57, and outputs the converted image data to a display (not shown) to display the images.

The frame memory 61 stores the decoded image data that has been subjected to the filtering operation and is supplied from the deblocking filter 24.

Based on the prediction mode information supplied from the lossless decoding unit 52, the intra prediction unit 62 generates predicted images from the decoded image data supplied from the addition unit 55, and outputs the generated predicted image data to the selector 64.

Based on the prediction mode information and motion vectors supplied from the lossless decoding unit 52, the motion compensation unit 63 performs motion compensation by reading the image data of reference images from the frame memory 61, and generates and outputs predicted image data to the selector 64. The motion compensation unit 63 outputs the macroblock size indicated by the prediction mode information to the motion vector number limit setting unit 65. Further, the motion compensation unit 63 determines whether the total number of motion vectors of two successive macroblocks is larger than the upper limit value sent from the motion vector number limit setting unit 65, and outputs the determination result to a system controller, for example.

The selector 64 outputs the predicted image data generated by the intra prediction unit 62 to the addition unit 55. The selector 64 also outputs the predicted image data generated by the motion compensation unit 63 to the addition unit 55.

The motion vector number limit setting unit 65 sets the upper limit value of the number of motion vectors in accordance with the macroblock size sent from the motion compensation unit 63, and notifies the motion compensation unit 63 of the set upper limit value. If the macroblock is larger than a $16 \times 16$ pixel macroblock, the motion vector number limit setting unit 65 sets a larger upper limit value than the upper limit value in a $16 \times 16$ pixel macroblock, to allow a check to be made to determine whether real-time operations can be guaranteed in view of memory bandwidth, with the number of motion vectors not being restricted to a smaller number than necessary. For example, in a case where the upper limit value of the number of motion vectors is p when the macroblock size is $16 \times 16$ pixels, and the macroblock size is $(16 \times m) \times (16 \times n)$ pixels, the motion vector number limit setting unit 65 sets the upper limit value at $(m \times n \times p)$, which is in predetermined ratio to the macroblock size. Accordingly, a check can be made to determine whether real-time operations can be guaranteed in view of memory bandwidth, with the number of motion vectors not being restricted to a smaller number than necessary.

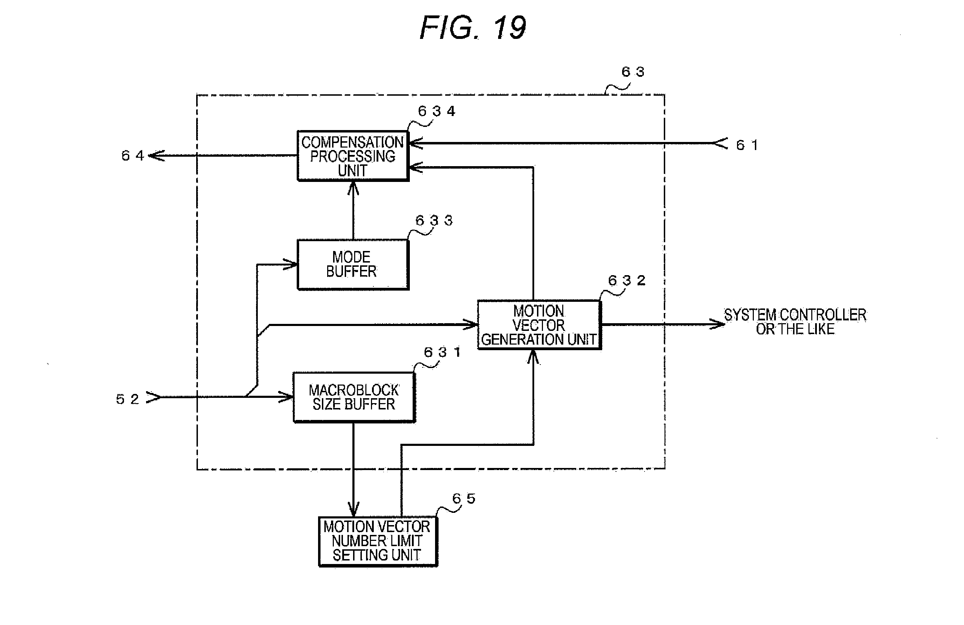

Fig. 19 is a diagram showing the structure of the motion compensation unit and the motion vector number limit setting unit.

The motion compensation unit 63 includes a macroblock size buffer 631, a motion vector generation unit 632, a mode buffer 633, and a motion compensation processing unit 634.

The macroblock size buffer 631 stores size identification information supplied from the lossless decoding unit 52. The macroblock size buffer 631 also outputs the stored size identification information to the motion vector number limit setting unit 65.

The motion vector number limit setting unit 65 determines the upper limit value of the number of motion vectors in accordance with the macroblock size, and notifies the motion vector generation unit 632 of the upper limit value.

To reconfigure motion vector information, the motion vector generation unit 632 includes a buffer that stores the motion vector information about adjacent blocks in time and space. Using the motion vector information about the adjacent blocks and the difference motion vector information indicated by the prediction mode information supplied from the lossless decoding unit, the motion vector generation unit 632 regenerates the motion vector information about the block. The motion vector generation unit 632 also determines whether the number of reconfigured motion vectors is larger than the upper limit value determined by the motion vector number limit setting unit 65, and outputs the determination result to the system controller (not shown) or the like.

The mode buffer 633 stores the prediction mode information that is supplied from the lossless decoding unit 52 and indicates the prediction mode. The mode buffer 633 also outputs the stored prediction mode information to the motion compensation processing unit 634.

Based on the prediction mode information, the motion compensation processing unit 634 reads the image data of reference images from the frame memory 61, and performs motion compensation in accordance with the motion vector information generated by the motion vector generation unit 632, to generate predicted image data. The motion compensation processing unit 634 outputs the generated predicted image data to the selector 64.

[6. Operations of the Image Decoding Apparatus]

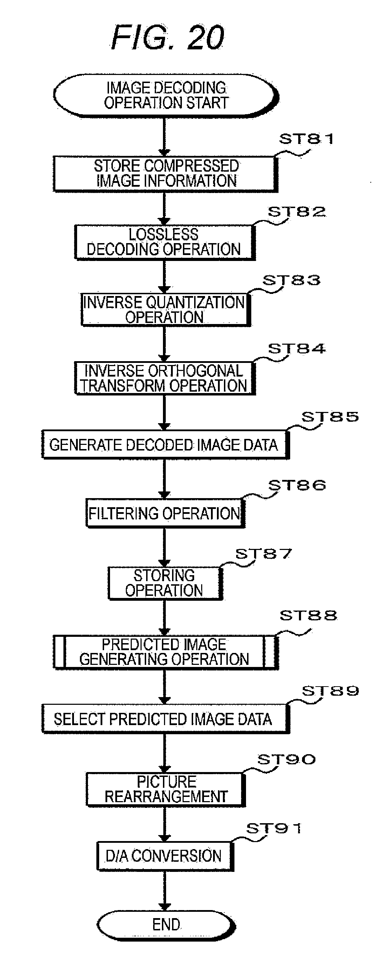

Referring now to the flowchart in Fig. 20, an image decoding operation to be performed by the image decoding device 50 is described.

In step ST81, the accumulation buffer 51 stores transmitted compressed image information. In step ST82, the lossless decoding unit 52 performs a lossless decoding operation. The lossless decoding unit 52 decodes the compressed image information supplied from the accumulation buffer 51. Specifically, the quantized data of each picture encoded by the lossless encoding unit 16 of Fig. 1 is obtained. The lossless decoding unit 52 also performs lossless decoding on the prediction mode information contained in the compressed image information. In a case where the obtained prediction mode information is information about an intra prediction mode, the prediction mode information is output to the intra prediction unit 62. In a case where the prediction mode information is information about an inter prediction mode, on the other hand, the lossless decoding unit 52 outputs the prediction mode information to the motion compensation unit 63.

In step ST83, the inverse quantization unit 53 performs an inverse quantization operation. The inverse quantization unit 53 inversely quantizes the quantized data decoded by the lossless decoding unit 52, having characteristics compatible with the characteristics of the quantization unit 15 of Fig. 1.

In step ST84, the inverse orthogonal transform unit 54 performs an inverse orthogonal transform operation. The inverse orthogonal transform unit 54 performs an inverse orthogonal transform on the transform coefficient data inversely quantized by the inverse quantization unit 53, having the characteristics compatible with the characteristics of the orthogonal transform unit 14 of Fig. 1.

In step ST85, the addition unit 55 generates decoded image data. The addition unit 55 adds the data obtained through the inverse orthogonal transform operation to predicted image data selected in step ST89, which will be described later, and generates the decoded image data. In this manner, the original images are decoded.

In step ST86, the deblocking filter 56 performs a filtering operation. The deblocking filter 56 performs deblocking filtering on the decoded image data output from the addition unit 55, and removes block distortions contained in the decoded images.

In step ST87, the frame memory 61 performs a decoded image data storing operation.

In step ST88, the intra prediction unit 62 and the motion compensation unit 63 perform predicted image generating operations. The intra prediction unit 62 and the motion compensation unit 63 each perform a predicted image generating operation in accordance with the prediction mode information supplied from the lossless decoding unit 52.

Specifically, in a case where prediction mode information about an intra prediction is supplied from the lossless decoding unit 52, the intra prediction unit 62 generates predicted image data based on the prediction mode information. In a case where prediction mode information about an inter prediction is supplied from the lossless decoding unit 52, on the other hand, the motion compensation unit 63 performs motion compensation based on the prediction mode information, to generate predicted image data.

In step ST89, the selector 64 selects predicted image data. Specifically, the selector 64 selects the predicted image supplied from the intra prediction unit 62 and the predicted image data generated by the motion compensation unit 63, and supplies the selected predicted image data to the addition unit 55, which adds the selected predicted image data to the output from the inverse orthogonal transform unit 54 in step ST85, as described above.

In step ST90, the picture rearrangement buffer 57 performs image rearrangement. Specifically, the order of frames rearranged for encoding by the picture rearrangement buffer 12 of the image encoding device 10 of Fig. 1 is rearranged in the original display order by the picture rearrangement buffer 57.

In step ST91, the D/A conversion unit 58 performs a D/A conversion on the image data supplied from the picture rearrangement buffer 57. The images are output to the display (not shown), and are displayed.

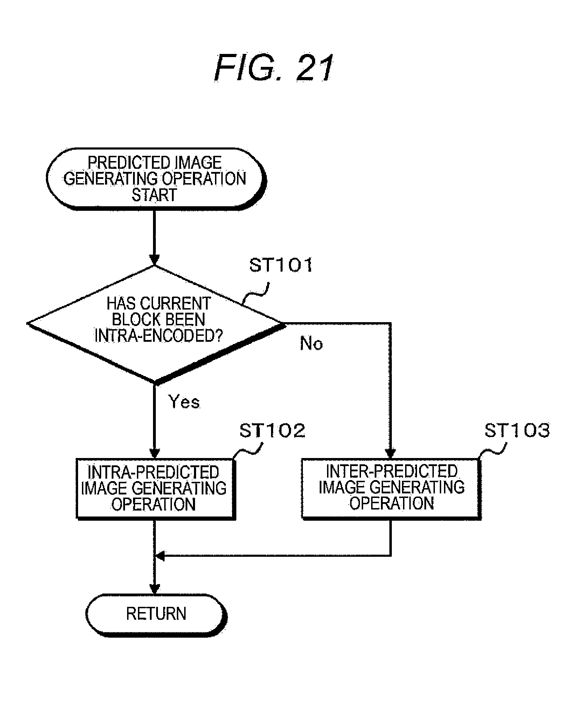

Referring now to the flowchart in Fig. 21, the predicted image generating operation in step ST88 of Fig. 20 is described.

In step ST101, the lossless decoding unit 52 determines whether the current block is intra-encoded. If the prediction mode information obtained by performing lossless decoding is prediction mode information about an intra prediction, the lossless decoding unit 52 supplies the prediction mode information to the intra prediction unit 62, and the operation moves on to step ST102. In a case where the prediction mode information is prediction mode information about an inter prediction mode, on the other hand, the lossless decoding unit 52 supplies the prediction mode information to the motion compensation unit 63, and the operation moves on to step ST103.

In step ST102, the intra prediction unit 62 performs a predicted image generating operation. Using decoded image data supplied from the addition unit 55 and the prediction mode information, the intra prediction unit 62 performs an intra prediction, to generate predicted image data.

In step ST103, the motion compensation unit 63 performs a predicted image generating operation. Based on the prediction mode information and motion vectors supplied from the lossless decoding unit 52, the motion compensation unit 63 performs motion compensation on a reference image read from the frame memory 61, and generates predicted image data.

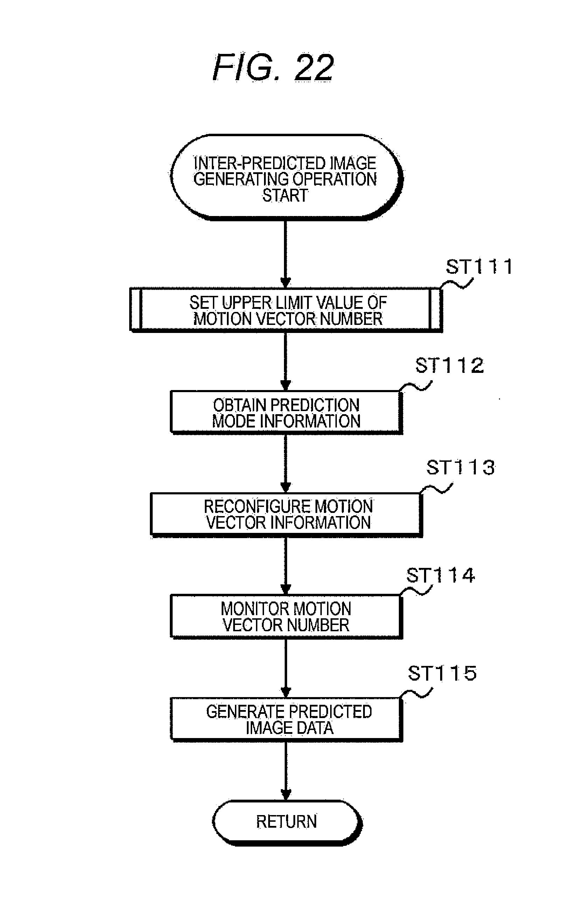

Fig. 22 is a flowchart showing the inter-predicted image generating operation of step ST103. In step ST111, the motion vector number limit setting unit 65 performs the same operation as that shown in Fig. 15, to set the upper limit value of the number of motion vectors. The motion vector number limit setting unit 65 sets the upper limit value of the number of motion vectors in accordance with the macroblock size. If the macroblock is larger than a $16 \times 16$ pixel macroblock, the motion vector number limit setting unit 65 sets a larger upper limit value than the upper limit value in a $16 \times 16$ pixel macroblock, to allow a check to be made to determine whether real-time operations can be guaranteed in view of memory bandwidth, with the number of motion vectors not being restricted to a smaller number than necessary. For example, in a case where the upper limit value of the number of motion vectors is p when the macroblock size is $16 \times 16$ pixels, and the macroblock size is $(16 \times m) \times (16 \times n)$ pixels, the motion vector number limit setting unit 65 sets the upper limit value at $(m \times n \times p)$. The operation then moves on to step ST112.

In step ST112, the motion compensation unit 63 obtains prediction mode information. To generate predicted image data, the motion compensation unit 63 obtains the prediction mode information from the lossless decoding unit 52, and moves on to step ST113.

In step ST113, the motion compensation unit 63 reconfigures motion vector information. The motion compensation unit 63 generates predicted motion vector information from the motion vectors of a decoded adjacent block, for example, and reconfigures motion vector information based on the predicted motion vector information and the difference motion vector information indicated by the prediction mode information. The operation then moves on to step ST114.

In step ST114, the motion compensation unit 63 monitors the number of motion vectors. The motion compensation unit 63 monitors whether the total number of motion vectors of two adjacent macroblocks is larger than the upper limit value determined in step ST 111. In a case where the number of motion vectors is larger than the upper limit value, the motion compensation unit 63 notifies the system controller or the like to that effect, and moves on to step ST 115.

In step ST115, the motion compensation unit 63 generates predicted image data. Based on the prediction mode information obtained in step ST112 and the motion vector information reconfigured in step ST 113, the motion compensation unit 63 performs motion compensation by reading the reference image data from the frame memory 61, and generates and outputs predicted image data to the selector 64.

As described above, with the image processing device illustrated in Fig. 18 and the image processing method shown in Fig. 20, the upper limit value of the number of motion vectors is set in accordance with macroblock size, and monitoring is performed to determine whether the number of motion vectors is larger than the upper limit value. The result of the monitoring is then output. Accordingly, based on the monitoring result, a check can be easily made to determine whether real-time operations can be guaranteed.

In a case where the number of motion vectors is larger than the upper limit value, and real-time operations are not guaranteed, the user can be notified to that effect through display or sound or the like.

In a case where the compressed image information contains determination information indicating that the number of motion vectors is larger than the upper limit value, a determination result indicating that the number of motion vectors is larger than the upper limit value is output based on the determination information. Accordingly, when real-time operations are not guaranteed, the user can be notified to that effect through display or sound or the like.

The macroblock size is not limited to that described in the above embodiments, and may be some other size. At present, to achieve higher encoding efficiency than that of H.264/AVC, an image encoding technique called HEVC (High Efficiency Video Coding) is being developed as a standard by JCTVC (Joint Collaboration Team - Video Coding), which is a joint standardization organization of ITU-T and ISO/IEC.

In HEVC, the size of a coding unit (CU) can be dynamically designated in each sequence. The coding units in HEVC are also called a coding tree block in which the coding unit having the largest size is the largest coding unit (LCU), and the coding unit having the smallest size is the smallest coding unit (SCU). The sizes of the LCU and the SCU are designated in a sequence parameter set that is part of compressed image information. In this manner, a range of usable coding unit sizes can be defined. Further, the value of split_flag is designated, to specify the size of each coding unit used in the respective sequences.

The shape of a coding unit is normally a square shape, and the size of each one side is expressed as a power of 2. Further, a coding unit can be divided into prediction units (PUs) that are processing units in intra predictions or inter predictions. Also, a coding unit can be divided into transform units (TUs) that are processing units in orthogonal transforms. In HEVC, as well as 4 × 4 pixels and 8 × 8 pixels transform units, transform units that are 16 × 16 pixels and 32 × 32 pixels in size can be used. Accordingly, blocks in this specification include not only macroblocks but also the concept of units such as coding units and the largest coding unit.

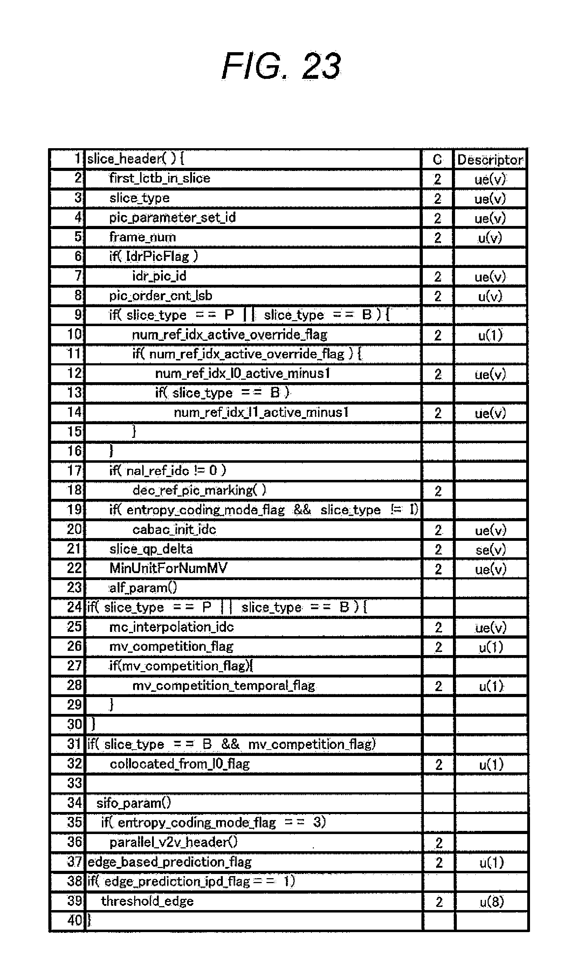

Further, the above described upper limit value of the number of motion vectors is not necessarily set in all the CUs, but may be set only in blocks on which a different value from the reference upper limit value is to be set. In this case, identification information for identifying only the blocks on which a different value from the reference upper limit value is to be set is incorporated into an encoded stream. Fig. 23 shows example syntaxes in a case where identification information is contained in slice headers. In Fig. 23, the number at the left end of each row is a row number provided for ease of explanation.

The syntax "MinUnitForNumMV" in the 22nd row is the information for designating (identifying) the smallest CU size on which an upper limit value is to be set. In a case where MinUnitForNumMV =16 is designated even though the smaller CU size is 8 × 8 pixels, for example, an upper limit value is set only on each CU having a size of 16 × 16 pixels or larger, and any upper limit value is not set on each CU of 8 × 8 pixels.

As another approach, a flag can be set. In a case where "MinUnitForNumMV" as a flag is set at "0", for example, an upper limit value is set at the level of 128 × 128 pixel size, but any upper limit value is not set at the levels of 64 × 64 pixel size and smaller. In a case where "MinUnitForNumMV" as a flag is set at "1", an upper limit value is set at the level of 64 × 64 pixel size, but any upper limit value is not set at the levels of 32 × 32 pixel size and smaller. In a case where "MinUnitForNumMV" as a flag is set at "2", an upper limit value is set at the level of 32 × 32 pixel size, but any upper limit value is not set at the levels of 16 × 16 pixel size and smaller.

If control is desired only in setting an upper limit value in 16 × 16 pixel size and larger, for example, motion prediction/compensation is performed, without any upper limit value being set on each CU of 8 × 8 pixel size. By setting such a syntax "MinUnitForNumMV", controlling the CUs of 8 × 8 pixel size can be skipped in this case, and upper limit value setting and motion prediction/compensation control can be flexibly performed.

Although Fig. 23 shows an example case where the syntax "MinUnitForNumMV" is provided in a slice header, this syntax may be stored in an area other than a slice header. For example, the syntax may be stored in a picture parameter set. As the syntax is stored in a slice header or a picture parameter set, the value of the syntax can be changed after a scene change, for example. Also, if "MinUnitForNumMV" is stored in a slice header, a picture can be turned into a multi-slice picture, and parallel processing can be performed for each slice.

[7. Case of Software Processing]

The series of operations described in this specification can be performed by hardware, software, or a combination of hardware and software. In a case where operations are performed by software, a program in which the operation sequences are recorded is installed in a memory incorporated into specialized hardware in a computer. Alternatively, the operations can be performed by installing the program into a general-purpose computer that can perform various kinds of operations.

For example, the program can be recorded beforehand on a hard disk or a ROM (Read Only Memory) as a recording medium. Alternatively, the program can be temporarily or permanently stored (recorded) in a removable recording medium such as a flexible disk, a CD-ROM (Compact Disc Read Only Memory), a MO (MagnetoOptical) disk, a DVD (Digital Versatile Disc), a magnetic disk, or a semiconductor memory. Such a removable recording medium can be provided as so-called packaged software.

The program can be not only installed into the computer from the above described removable recording medium, but also wirelessly transferred from a download site to the computer or transferred to the computer by wire via a network such as a LAN (Local Area Network) or the Internet so that the program transferred in this manner can be received in the computer and be installed into a recording medium such as an internal hard disk.

The step of writing the program includes operations to be performed in parallel or independently of one another if not necessarily in chronological order, as well as operations to be performed in chronological order in accordance with specified order.

[8. Applications to Electronic Apparatuses]

In the above described examples, H.264/AVC is used as the encoding/decoding technique.
However, the present technique can be applied to image encoding devices and image decoding devices that use other encoding/decoding techniques for performing motion prediction/compensation operations.

Further, the present technique can be applied to image encoding devices and image decoding devices that are used when image information (bit streams) compressed through orthogonal transforms such as discrete cosine transforms and motion compensation as in MPEG or H.26x is received via a network medium such as satellite broadcasting, cable TV (television), the Internet, or a portable telephone device, or is processed in a storage medium such as an optical or magnetic disk or a flash memory.

The above described image encoding device 10 and the image decoding device 50 can be applied to any electronic apparatuses. The following is a description of such examples.

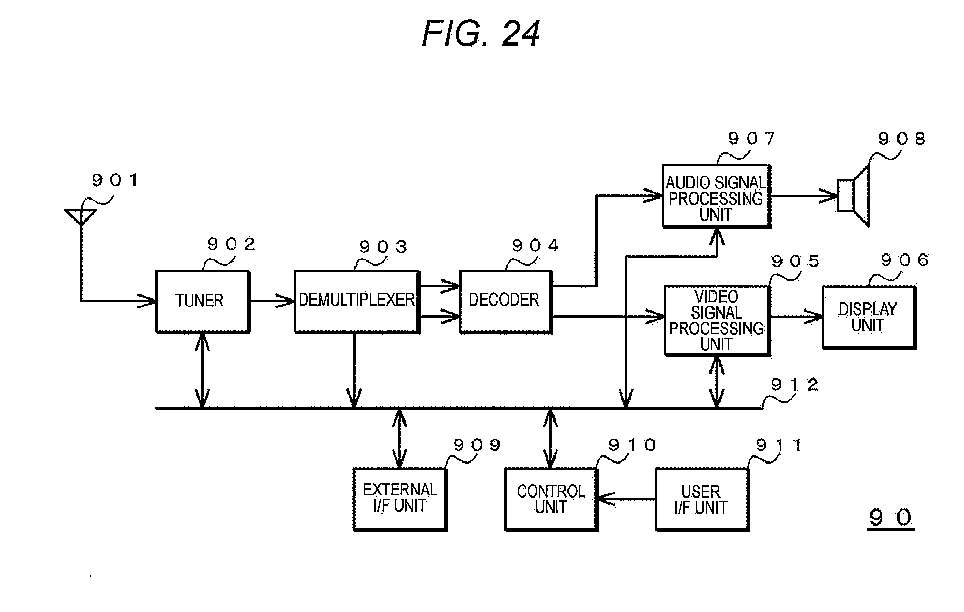

Fig. 24 schematically shows an example structure of a television apparatus to which the present technique is applied. The television apparatus 90 includes an antenna 901, a tuner 902, a demultiplexer 903, a decoder 904, a video signal processing unit 905, a display unit 906, an audio signal processing unit 907, a speaker 908, and an external interface unit 909. The television apparatus 90 further includes a control unit 910, a user interface unit 911, and the like.

The tuner 902 selects a desired channel from broadcast wave signals received at the antenna 901, and performs demodulation. The resultant stream is output to the demultiplexer 903.

The demultiplexer 903 extracts the video and audio packets of the show to be viewed from the stream, and outputs the data of the extracted packet to the decoder 904. The demultiplexer 903 also outputs a packet of data such as EPG (Electronic Program Guide) to the control unit 910. Where scrambling is performed, the demultiplexer or the like cancels the scrambling.

The decoder 904 performs a packet decoding operation, and outputs the video data generated through the decoding operation to the video signal processing unit 905, and the audio data to the audio signal processing unit 907.

The video signal processing unit 905 subjects the video data to a noise removal and video processing or the like in accordance with user settings. The video signal processing unit 905 generates video data of the show to be displayed on the display unit 906, or generates image data or the like through an operation based on an application supplied via a network. The video signal processing unit 905 also generates video data for displaying a menu screen or the like for item selection, and superimposes the video data on the video data of the show. Based on the video data generated in this manner, the video signal processing unit 905 generates a drive signal to drive the display unit 906.

Based on the drive signal from the video signal processing unit 905, the display unit 906 drives a display device (a liquid crystal display element, for example) to display the video of the show.

The audio signal processing unit 907 subjects the audio data to predetermined processing such as a noise removal, and performs a D/A conversion operation and an amplification operation on the processed audio data. The resultant audio data is supplied as an audio output to the speaker 908.

The external interface unit 909 is an interface for a connection with an external device or a network, and transmits and receives data such as video data and audio data.

The user interface unit 911 is connected to the control unit 910. The user interface unit 911 is formed with operation switches, a remote control signal reception unit, and the like, and supplies an operating signal according to a user operation to the control unit 910.

The control unit 910 is formed with a CPU (Central Processing Unit), a memory, and the like. The memory stores the program to be executed by the CPU, various kinds of data necessary for the CPU to perform operations, EPG data, data obtained via a network, and the like. The program stored in the memory is read and executed by the CPU at a predetermined time such as the time of activation of the television apparatus 90. The CPU executes the program to control the respective components so that the television apparatus 90 operates in accordance with user operations.

In the television apparatus 90, a bus 912 is provided for connecting the tuner 902, the demultiplexer 903, the video signal processing unit 905, the audio signal processing unit 907, the external interface unit 909, and the like to the control unit 910.

In the television apparatus having such a structure, the decoder 904 has the functions of the image decoding device (the image decoding method) of the present invention. Accordingly, even if extended macroblocks are used, image encoding operations compatible with the extended macroblocks can be performed. For example, in a case where the number of motion vectors is larger than the upper limit value and real-time operations are not guaranteed when compressed image information using extended macroblocks is reproduced, the user can be notified to that effect.

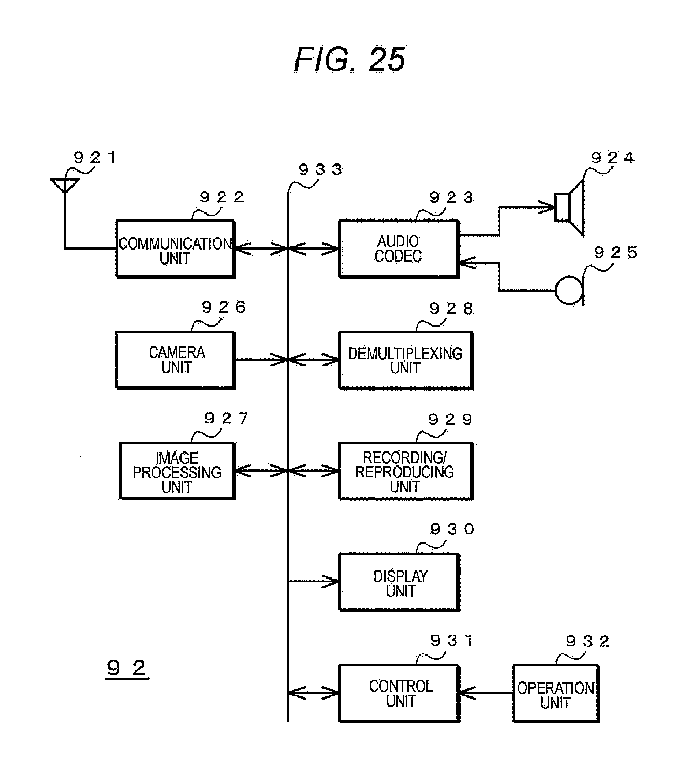

Fig. 25 schematically shows an example structure of a portable telephone device to which the present technique is applied. The portable telephone device 92 includes a communication unit 922, an audio codec 923, a camera unit 926, an image processing unit 927, a demultiplexing unit 928, a recording/reproducing unit 929, a display unit 930, and a control unit 931. Those components are connected to one another via a bus 933.

Also, an antenna 921 is connected to the communication unit 922, and a speaker 924 and a microphone 925 are connected to the audio codec 923. Further, an operation unit 932 is connected to the control unit 931.

The portable telephone device 92 performs various kinds of operations such as transmission and reception of audio signals, transmission and reception of electronic mail and image data, image capturing, and data recording, in various kinds of modes such as an audio communication mode and a data communication mode.

In the audio communication mode, an audio signal generated at the microphone 925 is converted into audio data, and the data is compressed at the audio codec 923. The compressed data is supplied to the communication unit 922. The communication unit 922 performs a modulation operation, a frequency conversion operation, and the like on the audio data, to generate a transmission signal. The communication unit 922 also supplies the transmission signal to the antenna 921, and the transmission signal is transmitted to a base station (not shown). The communication unit 922 also amplifies a signal received at the antenna 921, and performs a frequency conversion operation, a demodulation operation, and the like. The resultant audio data is supplied to the audio codec 923. The audio codec 923 decompresses audio data, and converts the audio data into an analog audio signal. The analog audio signal is then output to the speaker 924.

In a case where mail transmission is performed in the data communication mode, the control unit 931 receives text data that is input by operating the operation unit 932, and the input text is displayed on the display unit 930. In accordance with a user instruction or the like through the operation unit 932, the control unit 931 generates and supplies mail data to the communication unit 922. The communication unit 922 performs a modulation operation, a frequency conversion operation, and the like on the mail data, and transmits the resultant transmission signal from the antenna 921. The communication unit 922 also amplifies a signal received at the antenna 921, and performs a frequency conversion operation, a demodulation operation, and the like, to restore the mail data. This mail data is supplied to the display unit 930, and the content of the mail is displayed.

The portable telephone device 92 can cause the recording/reproducing unit 929 to store received mail data into a storage medium. The storage medium is a rewritable storage medium. For example, the storage medium may be a semiconductor memory such as a RAM or an internal flash memory, a hard disk, or a removable medium such as a magnetic disk, a magnetooptical disk, an optical disk, a USB memory, or a memory card.

In a case where image data is transmitted in the data communication mode, image data generated at the camera unit 926 is supplied to the image processing unit 927. The image processing unit 927 performs an encoding operation on the image data, to generate encoded data.

The demultiplexing unit 928 multiplexes the encoded data generated at the image processing unit 927 and the audio data supplied from the audio codec 923 by a predetermined technique, and supplies the multiplexed data to the communication unit 922. The communication unit 922 performs a modulation operation, a frequency conversion operation, and the like on the multiplexed data, and transmits the resultant transmission signal from the antenna 921. The communication unit 922 also amplifies a signal received at the antenna 921, and performs a frequency conversion operation, a demodulation operation, and the like, to restore the multiplexed data. This multiplexed data is supplied to the demultiplexing unit 928. The demultiplexing unit 928 divides the multiplexed data, and supplies the encoded data to the image processing unit 927, and the audio data to the audio codec 923.

The image processing unit 927 performs a decoding operation on the encoded data, to generate image data. This image data is supplied to the display unit 930, to display the received images. The audio codec 923 converts the audio data into an analog audio signal and outputs the analog audio signal to the speaker 924, and the received sound is output.

In the portable telephone device having the above structure, the image processing unit 927 has the functions of the image encoding device (the image encoding method) and the image decoding device (the image decoding method) of the present invention. Accordingly, even if extended macroblocks are used, image encoding operations and image decoding operations compatible with the extended macroblocks can be performed.

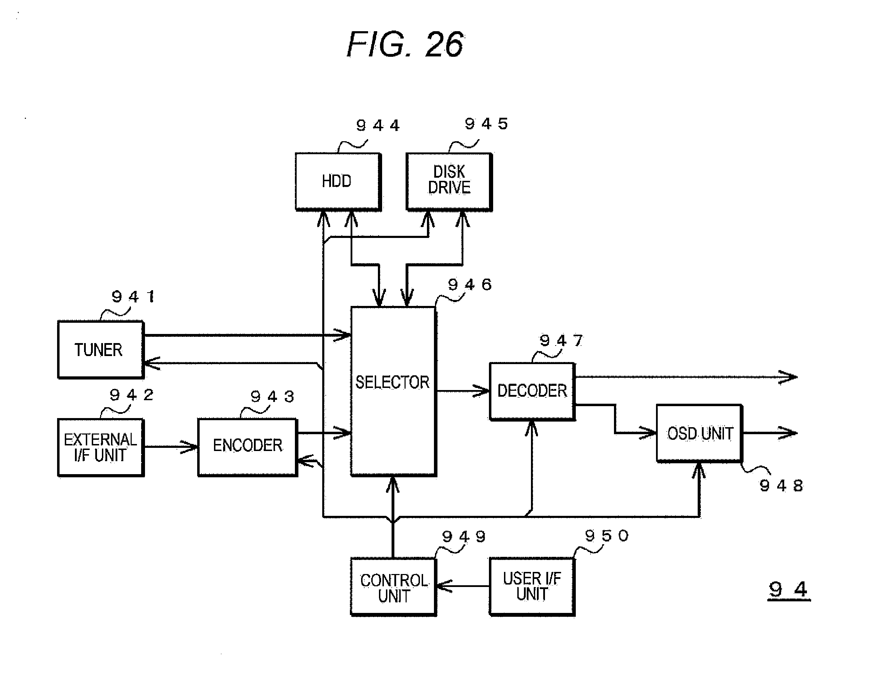

Fig. 26 schematically shows an example structure of a recording/reproducing apparatus to which the present technique is applied. The recording/reproducing apparatus 94 records the audio data and video data of a received broadcast show on a recording medium, and provides the recorded data to a user at a time according to an instruction from the user. The recording/reproducing apparatus 94 can also obtain audio data and video data from another apparatus, for example, and record the data on a recording medium. Further, the recording/reproducing apparatus 94 decodes and outputs audio data and video data recorded on a recording medium, so that a monitor device or the like can display images and outputs sound.

The recording/reproducing apparatus 94 includes a tuner 941, an external interface unit 942, an encoder 943, a HDD (Hard Disk Drive) unit 944, a disk drive 945, a selector 946, a decoder 947, an OSD (On-Screen Display) unit 948, a control unit 949, and a user interface unit 950.

The tuner 941 selects a desired channel from broadcast signals received at an antenna (not shown). The tuner 941 demodulates the received signal of the desired channel, and outputs the resultant compressed image information to the selector 946.

The external interface unit 942 is formed with at least one of an IEEE1394 interface, a network interface unit, a USB interface, a flash memory interface, and the like. The external interface unit 942 is an interface for a connection with an external device, a network, a memory card, or the like, and receives data such as video data and audio data to be recorded and the like.

The encoder 943 performs predetermined encoding on video data and audio data that are supplied from the external interface unit 942 and are not encoded, and outputs the compressed image information to the selector 946.

The HDD unit 944 records content data such as videos and sound, various kinds of programs, and other data on an internal hard disk, and reads the data from the hard disk at the time of reproduction or the like.

The disk drive 945 performs signal recording and reproduction on a mounted optical disk. The optical disk may be a DVD disk (such as a DVD-Video, a DVD-RAM, a DVD-R, a DVD-RW, a DVD+R, or a DVD+RW) or a Blu-ray disc, for example.

The selector 946 selects a stream from the tuner 941 or the encoder 943 at the time of video and audio recording, and supplies the stream to either the HDD unit 944 or the disk drive 945. The selector 946 also supplies a stream output from the HDD unit 944 or the disk drive 945 to the decoder 947 at the time of video and audio reproduction.

The decoder 947 performs a decoding operation on the stream. The decoder 947 supplies the video data generated by performing the decoding to the OSD unit 948. The decoder 947 also outputs the audio data generated by performing the decoding.

The OSD unit 948 also generates video data for displaying a menu screen or the like for item selection, and superimposes the video data on video data output from the decoder 947..

The user interface unit 950 is connected to the control unit 949. The user interface unit 950 is formed with operation switches, a remote control signal reception unit, and the like, and supplies an operating signal according to a user operation to the control unit 949.

The control unit 949 is formed with a CPU, a memory, and the like. The memory stores the program to be executed by the CPU and various kinds of data necessary for the CPU to perform operations. The program stored in the memory is read and executed by the CPU at a predetermined time such as the time of activation of the recording/reproducing apparatus 94. The CPU executes the program to control the respective components so that the recording/reproducing apparatus 94 operates in accordance with user operations.

In the recording/reproducing apparatus having the above structure, the encoder 943 has the functions of the image encoding device (the image encoding method) of the present invention, and the decoder 947 has the functions of the image decoding device (the image decoding method), so that image encoding operations and image decoding operations compatible with extended macroblocks can be performed when extended macroblocks are used.

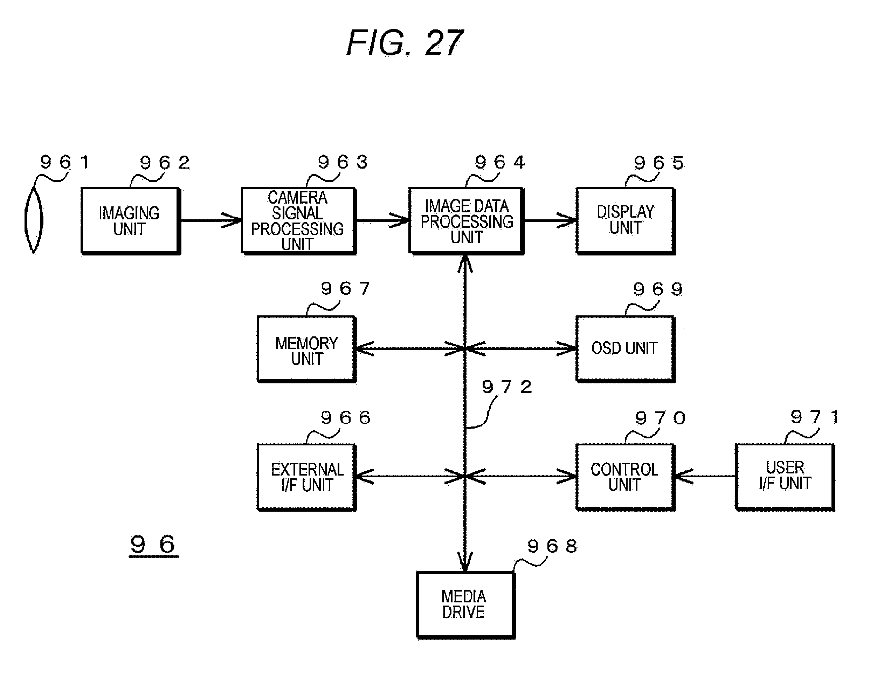

Fig. 27 schematically shows an example structure of an imaging apparatus to which the present technique is applied. An imaging apparatus 96 captures an image of an object, and causes a display unit to display the image of the object or records the image as image data on a recording medium.

The imaging apparatus 96 includes an optical block 961, an imaging unit 962, a camera signal processing unit 963, an image data processing unit 964, a display unit 965, an external interface unit 966, a memory unit 967, a media drive 968, an OSD unit 969, and a control unit 970. A user interface unit 971 is connected to the control unit 970. Further, the image data processing unit 964, the external interface unit 966, the memory unit 967, the media drive 968, the OSD unit 969, the control unit 970, and the like are connected via a bus 972.

The optical block 961 is formed with a focus lens, a diaphragm, and the like. The optical block 961 forms an optical image of an object on the imaging surface of the imaging unit 962. Formed with a CCD or a CMOS image sensor, the imaging unit 962 generates an electrical signal in accordance with the optical image through a photoelectric conversion, and supplies the electrical signal to the camera signal processing unit 963.

The camera signal processing unit 963 performs various kinds of camera signal processing such as a knee correction, a gamma correction, and a color correction on the electrical signal supplied from the imaging unit 962. The camera signal processing unit 963 supplies the image data subjected to the camera signal processing to the image data processing unit 964.

The image data processing unit 964 performs an encoding operation on the image data supplied from the camera signal processing unit 963. The image data processing unit 964 supplies the encoded data generated by performing the encoding operation to the external interface unit 966 and the media drive 968. The image data processing unit 964 also performs a decoding operation on the encoded data supplied from the external interface unit 966 and the media drive 968. The image data processing unit 964 supplies the image data generated by performing the decoding operation to the display unit 965. The image data processing unit 964 also performs an operation to supply the image data supplied from the camera signal processing unit 963 to the display unit 965, or superimposes display data obtained from the OSD unit 969 on the image data and supplies the image data to the display unit 965.

The OSD unit 969 generates display data of a menu screen and icons formed with symbols, characters, or figures, and outputs the data to the image data processing unit 964.

The external interface unit 966 is formed with a USB input/output terminal and the like, for example, and is connected to a printer when image printing is performed. A drive is also connected to the external interface unit 966 where necessary, and a removable medium such as a magnetic disk or an optical disk is mounted on the drive as appropriate. A computer program read from such a removable disk is installed where necessary. Further, the external interface unit 966 includes a network interface connected to a predetermined network such as a LAN or the internet. The control unit 970 reads encoded data from the memory unit 967 in accordance with an instruction from the user interface unit 971, for example, and can supply the encoded data from the external interface unit 966 to another apparatus connected thereto via a network. The control unit 970 can also obtain, via the external interface unit 966, encoded data or image data supplied from another apparatus via a network, and supply the encoded data or image data to the image data processing unit 964.

A recording medium to be driven by the media drive 968 may be a readable/rewritable removable disk such as a magnetic disk, a magnetooptical disk, an optical disk, or a semiconductor memory. The recording medium may be any type of removable medium, and may be a tape device, a disk, or a memory card. The recording medium may of course be a non-contact IC card or the like.

Alternatively, the media drive 968 and a recording medium may be integrated, and may be formed with an immobile storage medium such as an internal hard disk drive or a SSD (Solid State Drive).

The control unit 970 is formed with a CPU, a memory, and the like. The memory stores the program to be executed by the CPU, various kinds of data necessary for the CPU to perform operations, and the like. The program stored in the memory is read and executed by the CPU at a predetermined time such as the time of activation of the imaging apparatus 96. The CPU executes the program to control the respective components so that the imaging apparatus 96 operates in accordance with user operations.

In the imaging apparatus having the above structure, the image data processing unit 964 has the functions of the image encoding device (the image encoding method) and the image decoding device (the image decoding method) of the present invention. Accordingly, even if extended macroblocks are used when a captured image is recorded in the memory unit 967, a recording medium, or the like, image encoding operations and image decoding operations compatible with the extended macroblocks can be performed.

Further, the present technique should not be interpreted to be limited to the above described embodiments. The embodiments disclose the present technique through examples, and it should be obvious that those skilled in the art can modify or replace those embodiments with other embodiments without departing from the scope of the technique. That is, the claims should be taken into account in understanding the subject matter of the technique.

The present technique can also be in the following forms.

(1) An image processing device that includes:

a setting unit that sets the upper limit value of the number of motion vectors in accordance with the block size of a block that is a unit for encoding to be performed when image data is encoded;

a motion prediction/compensation unit that detects a prediction mode when the number of motion vectors of the block is equal to or smaller than the upper limit value set by the setting unit, and performs motion compensation on a reference image by using the motion vectors of the detected prediction mode, to generate a predicted image; and

an encoding unit that encodes the image data to generate an encoded stream by using the predicted image generated by the motion prediction/compensation unit.

(2) The image processing device of (1), wherein, when the block size of the block is larger than a predetermined size, the setting unit sets the upper limit value at a larger value than the upper limit value in a block of the predetermined size.

(3) The image processing device of (2), wherein, when the upper limit value of the number of motion vectors in a block of a predetermined size (N) is p, and a larger block size than the predetermined size is (N $\times$ m) $\times$ (N $\times$ n) pixels, the setting unit sets the upper limit value at (p $\times$ m $\times$ n).

(4) The image processing device of (2) or (3), wherein the predetermined size is 16 $\times$ 16 pixels.

(5) The image processing device of any of (2) through (4), wherein a block having a larger size than the predetermined size is the largest unit for encoding with the largest size among the units for encoding in a hierarchical structure.

(6) The image processing device of any of (2) through (5), wherein, when detecting the prediction mode, the motion prediction/compensation unit excludes each prediction mode having a larger number of motion vectors than the upper limit value from candidates for the prediction mode to be detected.

(7) The image processing device of any of (2) through (6), wherein the motion prediction/compensation unit monitors the number of times control is performed to restrict the number of motion vectors to a smaller number than the upper limit value in each frame, and, when the number of times control is performed exceeds a predetermined number of times, increases the block size of each block in the next frame.

(8) The image processing device of any of (1) through (7), further including:

a scene change detection unit that detects a scene change in the image data, wherein, when a scene change is detected by the scene change detection unit, the motion prediction/compensation unit sets the block size of each block at a predetermined size set in advance.

(9) The image processing device of any of (1) through (8), wherein, in an operation mode to generate a predicted image by detecting an optimum prediction mode, regardless of the number of motion vectors, and performing motion compensation on a reference image with the motion vectors of the detected optimum prediction mode, when the number of motion vectors in a prediction mode exceeds the upper limit value, the encoding unit transmits the encoded stream and determination information indicating that the number of motion vectors is larger than the upper limit value.

(10) The image processing device of any of (1) through (9), further including:

a generation unit that generates size identification information for identifying the block size of each block having an upper limit value set thereon by the setting unit,
wherein the encoding unit transmits the encoded stream and the size identification information.

(11) An image processing device that includes:

a setting unit that sets an upper limit value of the number of motion vectors in accordance with the block size of a block that is a unit for decoding to be performed when an encoded stream generated by encoding image data is decoded;
a motion compensation unit that detects a prediction mode when the number of motion vectors of the block is equal to or smaller than the upper limit value set by the setting unit, and performs motion compensation on a reference image by using the motion vectors of the detected prediction mode, to generate a predicted image; and
a decoding unit that decodes the encoded stream by using the predicted image generated by the motion compensation unit.

(12) The image processing device of (11), wherein, when the block size of the block is larger than a predetermined size, the setting unit sets the upper limit value at a larger value than the upper limit value in a block of the predetermined size.

(13) The image processing device of (12), wherein, when the upper limit value of the number of motion vectors in a block of a predetermined size (N) is p, and a larger block size than the predetermined size is $(N \times m) \times (N \times n)$ pixels, the setting unit sets the upper limit value at $(p \times m \times n)$.

(14) The image processing device of (12) or (13), wherein the predetermined size is $16 \times 16$ pixels.

(15) The image processing device of any of (12) through (14), wherein a block having a larger size than the predetermined size is the largest unit for encoding with the largest size among the units for encoding in a hierarchical structure.

(16) The image processing device of any of (12) through (15), wherein, when detecting the prediction mode, the motion compensation unit excludes each prediction mode having a larger number of motion vectors than the upper limit value from candidates for the prediction mode to be detected.

(17) The image processing device of any of (12) through (16), wherein the motion compensation unit monitors the number of times control is performed to restrict the number of motion vectors to a smaller number than the upper limit value in each frame, and, when the number of times control is performed exceeds a predetermined number of times, increases the block size of each block in the next frame.

(18) The image processing device of any of (11) through (17), further including:

a scene change detection unit that detects a scene change in the image data,
wherein, when a scene change is detected by the scene change detection unit, the motion compensation unit sets the block size of each block at a predetermined size set in advance.

(19) The image processing device of any of (11) through (18), wherein, in an operation mode to generate a predicted image by detecting an optimum prediction mode, regardless of the number of motion vectors, and performing motion compensation on a reference image with the motion vectors of the detected optimum prediction mode, the decoding unit obtains determination information from the encoded stream, the determination information indicating that the number of motion vectors is larger than the upper limit value.

(20) The image processing device of any of (11) through (19), wherein the decoding unit obtains size identification information from the encoded stream, the size identification information identifying the block size of each block having an upper limit value set thereon.

## INDUSTRIAL APPLICABILITY

With an image processing device and an image processing method according to this technique, the upper limit value of the number of motion vectors is set in accordance with macroblock size. An optimum prediction mode having a smaller number of motion vectors than the upper limit value is detected, and motion compensation using the motion vectors of the detected optimum prediction mode is performed on a reference image, to generate a predicted image. Accordingly, when macroblocks of an increased size are used, the number of motion vectors is not restricted to a smaller number than necessary, and image processing compatible with the extended macroblocks can be performed.

In view of the above, this technique is suitable for image encoding devices, image decoding devices, and the like, which are used when compressed image information (bit streams) obtained by performing encoding on each block is transmitted and received via a network medium such as satellite broadcasting, cable television broadcasting, the Internet, or a portable telephone, or is processed on a storage medium such as an optical or magnetic disk or a flash memory.

REFERENCE SIGNS LIST

10, 10a ... image encoding device 11... A/D conversion unit 12, 57 ... picture rearrangement buffer 13 ... subtraction unit 14 ... orthogonal transform unit 15 ... quantization unit 16 ... lossless quantization unit 17 ... accumulation buffer 18 ... rate control unit 21, 53 ... inverse quantization unit 22, 54 ... inverse orthogonal transform unit 23, 55 ... addition unit 24, 56 ... deblocking filter 25 ... frame memory 29 ... scene change detection unit 31 ... intra prediction unit 32, 32a ... motion prediction/compensation unit 33 ... predicted image/optimum mode select unit 35, 65 ... motion vector number limit setting unit 50 ... image decoding device 51 ... accumulation buffer 52 ... lossless decoding unit 58 ... D/A conversion unit 61 ... frame memory 62 ... intra prediction unit 63 ... motion compensation unit 64 ... selector 90 ... television apparatus 92 ... portable telephone device 94 ... recording/reproducing apparatus 96 ... imaging apparatus 321, 321a ... motion search unit 322, 322a ... mode determination unit 323, 634 ... motion compensation processing unit 324 ... motion vector buffer 631 ... macroblock size buffer 632 ... motion vector generation unit 633 ... mode buffer

**Claims**

1. An image processing device comprising:

   a setting unit configured to set an upper limit value of the number of motion vectors in accordance with a block size of a block that is a unit for encoding to be performed when image data is encoded;
   a motion prediction/compensation unit configured to detect a prediction mode when the number of motion vectors of the block is equal to or smaller than the upper limit value set by the setting unit, and performs motion compensation on a reference image by using the motion vectors of the detected prediction mode, to generate a predicted image; and
   an encoding unit configured to encode the image data to generate an encoded stream by using the predicted image generated by the motion prediction/compensation unit.

2. The image processing device according to claim 1, wherein, when the block size of the block is larger than a predetermined size, the setting unit sets the upper limit value at a larger value than an upper limit value in a block of the predetermined size.

3. The image processing device according to claim 2, wherein, when the upper limit value of the number of motion vectors in a block of a predetermined size (N) is p, and a larger block size than the predetermined size is (N $\times$ m) $\times$ (N $\times$ n) pixels, the setting unit sets the upper limit value at (p $\times$ m $\times$ n).

4. The image processing device according to claim 3, wherein the predetermined size is 16 $\times$ 16 pixels.

5. The image processing device according to claim 2, wherein a block having a larger size than the predetermined size is the largest unit for encoding with the largest size among units for encoding in a hierarchical structure.

6. The image processing device according to claim 2, wherein, when detecting the prediction mode, the motion prediction/compensation unit excludes each prediction mode having a larger number of motion vectors than the upper limit value from candidates for the prediction mode to be detected.

7. The image processing device according to claim 2, wherein the motion prediction/compensation unit monitors the number of times control is performed to restrict the number of motion vectors to a smaller number than the upper limit value in each frame, and, when the number of times control is performed exceeds a predetermined number of times, increases a block size of each block in the next frame.

8. The image processing device according to claim 7, further comprising:

a scene change detection unit configured to detect a scene change in the image data, wherein, when a scene change is detected by the scene change detection unit, the motion prediction/compensation unit sets the block size of each block at a predetermined size set in advance.

9. The image processing device according to claim 1, wherein, in an operation mode to generate a predicted image by detecting an optimum prediction mode, regardless of the number of motion vectors, and performing motion compensation on a reference image with motion vectors of the detected optimum prediction mode, when the number of motion vectors in a prediction mode exceeds the upper limit value, the encoding unit transmits the encoded stream and determination information indicating that the number of motion vectors is larger than the upper limit value.

10. The image processing device according to claim 1, further comprising:

a generation unit configured to generate size identification information for identifying a block size of each block having an upper limit value set thereon by the setting unit, wherein the encoding unit transmits the encoded stream and the size identification information.

11. An image processing method comprising:

setting an upper limit value of the number of motion vectors in accordance with a block size of a block that is a unit for encoding to be performed when image data is encoded; generating a predicted image by detecting a prediction mode when the number of motion vectors of the block is equal to or smaller than the set upper limit value, and performing motion compensation on a reference image with motion vectors of the detected prediction mode; and generating an encoded stream by encoding the image data with the generated predicted image.

12. An image processing device comprising:

a setting unit configured to set an upper limit value of the number of motion vectors in accordance with a block size of a block that is a unit for decoding to be performed when an encoded stream generated by encoding image data is decoded; a motion compensation unit configured to detect a prediction mode when the number of motion vectors of the block is equal to or smaller than the upper limit value set by the setting unit, and perform motion compensation on a reference image by using motion vectors of the detected prediction mode, to generate a predicted image; and a decoding unit configured to decode the encoded stream by using the predicted image generated by the motion compensation unit.

13. The image processing device according to claim 12, wherein, when the block size of the block is larger than a predetermined size, the setting unit sets the upper limit value at a larger value than an upper limit value in a block of the predetermined size.

14. The image processing device according to claim 13, wherein, when the upper limit value of the number of motion vectors in a block of a predetermined size (N) is p, and a larger block size than the predetermined size is (N $\times$ m) $\times$ (N $\times$ n) pixels, the setting unit sets the upper limit value at (p $\times$ m $\times$ n).

15. The image processing device according to claim 14, wherein the predetermined size is 16 $\times$ 16 pixels.

16. The image processing device according to claim 13, wherein a block having a larger size than the predetermined size is the largest unit for encoding with the largest size among units for encoding in a hierarchical structure.

17. The image processing device according to claim 13, wherein, when detecting the prediction mode, the motion compensation unit excludes each prediction mode having a larger number of motion vectors than the upper limit value from candidates for the prediction mode to be detected.

18. The image processing device according to claim 13, wherein the motion compensation unit monitors the number of times control is performed to restrict the number of motion vectors to a smaller number than the upper limit value in each frame, and, when the number of times control is performed exceeds a predetermined number of times, increases a block size of each block in the next frame.

19. The image processing device according to claim 18, further comprising:

a scene change detection unit configured to detect a scene change in the image data,
wherein, when a scene change is detected by the scene change detection unit, the motion compensation unit sets the block size of each block at a predetermined size set in advance.

20. The image processing device according to claim 12, wherein, in an operation mode to generate a predicted image by detecting an optimum prediction mode, regardless of the number of motion vectors, and performing motion compensation on a reference image with motion vectors of the detected optimum prediction mode, the decoding unit obtains determination information from the encoded stream, the determination information indicating that the number of motion vectors is larger than the upper limit value.

21. The image processing device according to claim 12, wherein the decoding unit obtains size identification information from the encoded stream, the size identification information identifying a block size of each block having an upper limit value set thereon.

22. An image processing method comprising the steps of:

setting an upper limit value of the number of motion vectors in accordance with a block size of a block that is a unit for decoding to be performed when an encoded stream generated by encoding image data is decoded;
generating a predicted image by detecting a prediction mode when the number of motion vectors of the block is equal to or smaller than the upper limit value set by the setting unit, and performing motion compensation on a reference image with motion vectors of the detected prediction mode; and
decoding the encoded stream with the generated predicted image.

# FIG. 1

FIG. 2

(A)

16×16   16×8   8×16   8×8

(B)

8×8   8×4   4×8   4×4

FIG. 3

# FIG. 4

REFERENCE FRAMES

ORIGINAL FRAME

THE BLOCKS

EP 2 603 002 A1

## FIG. 5

LO REFERENCE PICTURE          THE PICTURE          L1 REFERENCE PICTURE

m v col

CO-LOCATED
BLOCK

m v L0

m v L1

THE BLOCK

T D B

T D D

t

## FIG. 6

| A | e 1 | b |  | A |
|---|---|---|---|---|
|  | e 2 | e 3 |  |  |
| d |  | c |  | d |
|  |  |  |  |  |
| A |  | b |  | A |

# FIG. 7

(A)

(B)

*FIG. 8*

| MB (a) | MB (a+1) | MB (a+2) |
|---|---|---|
| N (a) | N (a+1) | N (a+2) |

$NHL \geqq N(a) + N(a+1)$

$NHL \geqq N(a+1) + N(a+2)$

FIG. 9

# FIG. 10

MOTION COMPENSATION PROCESSING UNIT — 323

MOTION VECTOR BUFFER — 324

MODE DETERMINATION UNIT — 322

MOTION SEARCH UNIT — 321

MOTION VECTOR NUMBER LIMIT SETTING UNIT — 35

32

33   16   12   27

EP 2 603 002 A1

# FIG. 11

IMAGE ENCODING
OPERATION START

ST11
A/D
CONVERSION

ST12
PICTURE
REARRANGEMENT

ST13
GENERATE PREDICTION
ERROR DATA

ST14
ORTHOGONAL
TRANSFORM
OPERATION

ST15
QUANTIZATION
OPERATION

ST16
INVERSE
QUANTIZATION
OPERATION

ST17
INVERSE
ORTHOGONAL
TRANSFORM OPERATION

ST18
GENERATE REFERENCE
IMAGE DATA

ST19
FILTERING
OPERATION

ST20
STORE REFERENCE
IMAGE DATA

ST21
PREDICTION
OPERATIONS

ST22
SELECT PREDICTED
IMAGE DATA

ST23
LOSSLESS
ENCODING OPERATION

ST24
ACCUMULATION
OPERATION

ST25
RATE CONTROL

END

## FIG. 12

```
    ┌─────────────────┐
    │   PREDICTION    │
    │   OPERATIONS    │
    │     START       │
    └────────┬────────┘
             │
             ▼                    ST31
    ┌─────────────────┐
    │ INTRA PREDICTION │
    │   OPERATIONS    │
    └────────┬────────┘
             │
             ▼                    ST32
    ┌─────────────────┐
    │ INTER PREDICTION │
    │   OPERATIONS    │
    └────────┬────────┘
             │
             ▼
    ┌─────────────────┐
    │     RETURN      │
    └─────────────────┘
```

## FIG. 13

```
    ┌─────────────────────┐
    │  INTRA PREDICTION   │
    │  OPERATIONS START   │
    └──────────┬──────────┘
               │
               ▼                   ST41
    ┌─────────────────────┐
    │  INTRA PREDICTION   │
    │ OPERATIONS IN RESPECTIVE │
    │   PREDICTION MODES  │
    └──────────┬──────────┘
               │
               ▼                   ST42
    ┌─────────────────────┐
    │  CALCULATE COST     │
    │  FUNCTION VALUES IN │
    │ RESPECTIVE PREDICTION │
    │       MODES         │
    └──────────┬──────────┘
               │
               ▼                   ST43
    ┌─────────────────────┐
    │ DETERMINE OPTIMUM INTRA │
    │   PREDICTION MODE   │
    └──────────┬──────────┘
               │
               ▼
    ┌─────────────────────┐
    │       RETURN        │
    └─────────────────────┘
```

# FIG. 14

INTER PREDICTION
OPERATIONS START

SET UPPER LIMIT VALUE OF
NUMBER OF MOTION VECTORS — ST51

MOTION
PREDICTION
OPERATIONS — ST52

MOTION VECTOR
ENCODING OPERATION — ST53

DETERMINE MOTION VECTORS
AND REFERENCE IMAGE FOR
EACH PREDICTION MODE — ST54

CALCULATE COST
FUNCTION VALUES IN
RESPECTIVE
PREDICTION MODES — ST55

DETERMINE OPTIMUM INTER
PREDICTION MODE — ST56

RETURN

# FIG. 15

START OF SETTING OF UPPER LIMIT
VALUE OF MOTION VECTOR NUMBER

↓

DETERMINE MACROBLOCK SIZE — ST61

↓

CALCULATE UPPER LIMIT
VALUE OF MOTION
VECTOR NUMBER — ST62

↓

RETURN

FIG. 16

*FIG. 17*

# FIG. 18

EP 2 603 002 A1

*FIG. 19*

SYSTEM CONTROLLER OR THE LIKE

61

63

632 — MOTION VECTOR GENERATION UNIT

634 — COMPENSATION PROCESSING UNIT

633 — MODE BUFFER

631 — MACROBLOCK SIZE BUFFER

65 — MOTION VECTOR NUMBER LIMIT SETTING UNIT

64

52

44

# *FIG. 20*

```
      IMAGE DECODING
      OPERATION START
            │
            ▼
   ┌─────────────────────┐   ST81
   │ STORE COMPRESSED    │
   │ IMAGE INFORMATION   │
   └─────────────────────┘
            │
            ▼
   ┌─────────────────────┐   ST82
   │ LOSSLESS            │
   │ DECODING OPERATION  │
   └─────────────────────┘
            │
            ▼
   ┌─────────────────────┐   ST83
   │ INVERSE QUANTIZATION│
   │ OPERATION           │
   └─────────────────────┘
            │
            ▼
   ┌─────────────────────┐   ST84
   │ INVERSE ORTHOGONAL  │
   │ TRANSFORM OPERATION │
   └─────────────────────┘
            │
            ▼
   ┌───────────────────────────┐   ST85
   │ GENERATE DECODED IMAGE DATA│
   └───────────────────────────┘
            │
            ▼
   ┌─────────────────────┐   ST86
   │ FILTERING OPERATION │
   └─────────────────────┘
            │
            ▼
   ┌─────────────────────┐   ST87
   │ STORING             │
   │ OPERATION           │
   └─────────────────────┘
            │
            ▼
   ┌─────────────────────┐   ST88
   │ PREDICTED IMAGE     │
   │ GENERATING OPERATION│
   └─────────────────────┘
            │
            ▼
   ┌───────────────────────────┐   ST89
   │ SELECT PREDICTED IMAGE DATA│
   └───────────────────────────┘
            │
            ▼
   ┌─────────────────────┐   ST90
   │ PICTURE             │
   │ REARRANGEMENT       │
   └─────────────────────┘
            │
            ▼
   ┌─────────────────────┐   ST91
   │ D/A CONVERSION      │
   └─────────────────────┘
            │
            ▼
           END
```

# FIG. 21

```
        ┌──────────────────────┐
        │   PREDICTED IMAGE     │
        │ GENERATING OPERATION  │
        │        START          │
        └──────────────────────┘
                   │
                   ▼
              ╱─────────╲           ST101
            ╱  HAS CURRENT ╲
           ╱   BLOCK BEEN    ╲
           ╲  INTRA-ENCODED? ╱───────── No ───────┐
            ╲              ╱                        │
              ╲─────────╱                           │
                   │                                │
                  Yes                               │
                   │                                │
            ST102  │                         ST103  │
                   ▼                                ▼
        ┌──────────────────┐            ┌──────────────────┐
        │  INTRA-PREDICTED │            │  INTER-PREDICTED │
        │ IMAGE GENERATING │            │ IMAGE GENERATING │
        │    OPERATION     │            │    OPERATION     │
        └──────────────────┘            └──────────────────┘
                   │                                │
                   ◄────────────────────────────────┘
                   │
                   ▼
             ┌────────────┐
             │   RETURN   │
             └────────────┘
```

# FIG. 22

INTER-PREDICTED IMAGE
GENERATING OPERATION
START

ST111
SET UPPER LIMIT VALUE OF
MOTION VECTOR NUMBER

ST112
OBTAIN PREDICTION
MODE INFORMATION

ST113
RECONFIGURE MOTION
VECTOR INFORMATION

ST114
MONITOR MOTION
VECTOR NUMBER

ST115
GENERATE PREDICTED
IMAGE DATA

RETURN

# FIG. 23

| | | C | Descriptor |
|---|---|---|---|
| 1 | slice_header( ) { | | |
| 2 | first_lctb_in_slice | 2 | ue(v) |
| 3 | slice_type | 2 | ue(v) |
| 4 | pic_parameter_set_id | 2 | ue(v) |
| 5 | frame_num | 2 | u(v) |
| 6 | if( IdrPicFlag ) | | |
| 7 | idr_pic_id | 2 | ue(v) |
| 8 | pic_order_cnt_lsb | 2 | u(v) |
| 9 | if( slice_type == P \|\| slice_type == B ) { | | |
| 10 | num_ref_idx_active_override_flag | 2 | u(1) |
| 11 | if( num_ref_idx_active_override_flag ) { | | |
| 12 | num_ref_idx_l0_active_minus1 | 2 | ue(v) |
| 13 | if( slice_type == B ) | | |
| 14 | num_ref_idx_l1_active_minus1 | 2 | ue(v) |
| 15 | } | | |
| 16 | } | | |
| 17 | if( nal_ref_idc != 0 ) | | |
| 18 | dec_ref_pic_marking( ) | 2 | |
| 19 | if( entropy_coding_mode_flag && slice_type != I) | | |
| 20 | cabac_init_idc | 2 | ue(v) |
| 21 | slice_qp_delta | 2 | se(v) |
| 22 | MinUnitForNumMV | 2 | ue(v) |
| 23 | alf_param() | | |
| 24 | if( slice_type == P \|\| slice_type == B ) { | | |
| 25 | mc_interpolation_idc | 2 | ue(v) |
| 26 | mv_competition_flag | 2 | u(1) |
| 27 | if(mv_competition_flag){ | | |
| 28 | mv_competition_temporal_flag | 2 | u(1) |
| 29 | } | | |
| 30 | } | | |
| 31 | if( slice_type == B && mv_competition_flag) | | |
| 32 | collocated_from_l0_flag | 2 | u(1) |
| 33 | | | |
| 34 | sifo_param() | | |
| 35 | if( entropy_coding_mode_flag == 3) | | |
| 36 | parallel_v2v_header() | 2 | |
| 37 | edge_based_prediction_flag | 2 | u(1) |
| 38 | if( edge_prediction_ipd_flag == 1) | | |
| 39 | threshold_edge | 2 | u(8) |
| 40 | } | | |

## FIG. 24

EP 2 603 002 A1

## FIG. 25

# FIG. 26

# FIG. 27

961

962
IMAGING
UNIT

963
CAMERA
SIGNAL
PROCESSING
UNIT

964
IMAGE DATA
PROCESSING
UNIT

965
DISPLAY
UNIT

967
MEMORY
UNIT

969
OSD UNIT

972

966
EXTERNAL
I/F UNIT

970
CONTROL
UNIT

971
USER
I/F UNIT

96

968
MEDIA
DRIVE

EP 2 603 002 A1

## INTERNATIONAL SEARCH REPORT

| | International application No. |
| --- | --- |
| | PCT/JP2011/066920 |

A. CLASSIFICATION OF SUBJECT MATTER
*H04N7/32(2006.01)i*

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-154061 A  (Sony Corp.), 08 July 2010 (08.07.2010), paragraph [0008] & US 2010/0158123 A1 | 1-22 |
| A | JP 2008-193410 A  (Matsushita Electric Industrial Co., Ltd.), 21 August 2008 (21.08.2008), paragraph [0098] & US 2008/0187052 A1 | 1-22 |
| A | P. Chen, Y. Ye and M. Karczewicz, "Video Coding Using Extended Block Sizes", ITU – Telecommunications Standardization Sector STUDY GROUP 16 Question 6 Video Coding Experts Group (VCEG) 36th Meeting: San Diego, USA, 8-10 October, 2008, [VCEG-AJ23] | 1-22 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 October, 2011 (21.10.11) | 01 November, 2011 (01.11.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/066920

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2006/013690 A1 (Matsushita Electric Industrial Co., Ltd.), 09 February 2006 (09.02.2006), entire text; all drawings & US 2007/0206675 A1 & EP 1775961 A1 & CN 1993992 A | 1-22 |

Form PCT/ISA/210 (continuation of second sheet) (July 2009)

**REFERENCES CITED IN THE DESCRIPTION**

**Non-patent literature cited in the description**

- *Video Coding Using Extended Block Sizes,* January 2009